# EUROPÄISCHE PATENTANMELDUNG

(11) **EP 0 647 913 A2**
(43) Veröffentlichungstag der Anmeldung: **12.04.1995**
(21) Anmeldenummer: 94115866.9
(22) Anmeldetag: 07.10.1994
(51) Int. Cl.: G06F 19/00, G07C 11/00

(54) **Einrichtung zum Durchführen von Lotterie-Spielen**

(30) Priorität: 08.10.1993 DE 9315231 U; 16.05.1994 DE 9408069 U
(71) Anmelder: Systemform GmbH, D-83224 Grassau (DE)
(72) Erfinder: Hofmann,Horst, D-83209 Prien (DE)
(74) Vertreter: Prechtel, Jörg, Dipl.-Phys. Dr.

(57) **Zusammenfassung**

Eine Einrichtung zum Durchführen von Spielen, insbesondere von Gewinnspielen, insbesondere Lotteriespiele, umfaßt wenigstens eine Spieleinheit 10',12'. Die wenigstens eine Spieleinheit 10',12' umfaßt eine erste Lese-/Schreib-Einrichtung 18',20' zum Lesen von Daten von einem Datenträger 22' und zum Schreiben von Daten auf den Datenträger 22', eine Bildwiedergabe-Einrichtung 14' zur Wiedergabe von das Spiel betreffender Information sowie von von dem Datenträger 22' gelesenen Daten, ein Datenspeichermedium zum Speichern von das Spiel betreffenden Daten, eine Befehlseingabeeinrichtung 50' zur Eingabe von Eingabebefehlen, insbesondere von Spielbefehlen, und eine zentrale Recheneinheit zum Steuern der Spieleinheit 10',12'.

## Beschreibung

Die vorliegende Erfindung bezieht sich auf eine Einrichtung zum Durchführen von Spielen, insbesondere von Gewinnspielen, insbesondere Lotteriespiele, mit wenigstens einer Spieleinheit.

Zum Durchführen von Gewinnspielen, wie z. B. dem Lotto- oder Totospiel, ist es bisher üblich, daß der Spieler in einer Spielannahmestelle einen Spielschein ausfüllt. Dabei gibt der Spieler einerseits seinen Tip für die Gewinnzahlen ab, d.h. im Falle von Lotto kreuzt er pro Spielkästchen sechs Zahlen an, und gibt ferner auf dem Spielschein seinen Namen und z.B. die Information an, ob er auch ein zusätzliches Spiel, wie z.B. das Spiel 77, spielen möchte. Nachdem der Spieler den Spielschein ausgefüllt hat, geht er zu einer Kasse, an welcher er den dem Preis des Spiels entsprechenden Betrag bezahlt, und an welcher der Spielschein quittiert wird.

Insbesondere bei Spielgemeinschaften, welche eine große Anzahl an Personen umfassen können, die dann z.B. im Falle eines Lottospiels jeweils mehrere Spielkästchen ausfüllen können, ergibt sich somit das Problem, daß zu jeder Durchführung des Lottospiels, z.B. jede Woche, eine große Anzahl von Spielscheinen ausgefüllt und an der Kasse quittiert werden muß. Dies erfordert sowohl zum Ausfüllen als auch zum Bezahlen an der Kasse für die Spieler einen erheblichen Zeitaufwand. Auch ist es nicht möglich, dieselben Spielscheine mehrfach, d.h. bei mehreren Ziehungen, zu verwenden. Zu diesem Zweck muß vom Spieler jeweils ein neuer Spielschein ausgefüllt werden, so daß der erhebliche Zeitaufwand bei jeder Ziehung, an der der Spieler teilnehmen möchte, erforderlich ist.

Ferner sind Spiele bekannt, bei welchen der Spieler nach Bezahlen eines gewissen Spielpreises in der Form von Bargeld oder Jetons an einem Spielautomaten das jeweilige Spiel durchführen kann. Dabei kann der Spieler an dem jeweiligen Automaten solange spielen, bis sein Guthaben verbraucht ist. Der Spieler kann dabei aber lediglich auf dem Automaten spielen, für den er den Spielpreis entrichtet hat, bzw. für den er Jetons gelöst hat. Dies weist den Nachteil auf, daß der Spieler das Spiel nicht mehr wechseln kann.

Demgegenüber ist es die Aufgabe der vorliegenden Erfindung, eine Einrichtung zum Durchführen von Spielen, insbesondere von Gewinnspielen, insbesondere Lotteriespielen, vorzusehen, bei welcher der für den Spieler erforderliche Zeitaufwand zum Durchführen eines Spiels deutlich verringert ist, und bei welcher der Spieler leicht zwischen verschiedenen Spielen wechseln kann.

Erfindungsgemäß wird die Aufgabe durch eine Einrichtung zum Durchführen von Spielen, insbesondere von Gewinnspielen, insbesondere Lotteriespiele, mit wenigstens einer Spieleinheit gelöst, wobei die wenigstens eine Spieleinheit umfaßt: eine erste Lese-/Schreib-Einrichtung zum Lesen von Daten von einem Datenträger und zum Schreiben von Daten auf den Datenträger, eine Bildwiedergabeeinrichtung zur Wiedergabe von das Spiel betreffender Information sowie von von dem Datenträger gelesenen Daten, ein Datenspeichermedium zum Speichern von das Spiel betreffenden Daten, eine Befehlseingabeeinrichtung zur Eingabe von Eingabebefehlen, insbesondere von Spielbefehlen, und eine zentrale Recheneinheit zum Steuern der Spieleinheit.

Bei der erfindungsgemäßen Einrichtung wird die zum Durchführen eines Spiels erforderliche Information, wie z. B. ein Lottoschein, ein Totoschein oder dergleichen auf einer Bildwiedergabeeinrichtung angezeigt. Der Spieler kann seine Gewinnzeichenkombination in die Spieleinheit eingeben, welche diese dann auf einem Datenträger speichert. Der nunmehr die Spielzeichenkombination enthaltende Datenträger wird dann als "Lotterieschein" verwendet. Insbesondere ist es dabei möglich, den Datenträger als "Lotterieschein" mehrfach zu verwenden, d.h. der Spieler kann z.B. jede Woche mit dem gleichen Datenträger und der darauf gespeicherten Zeichenkombination an der Ziehung teilnehmen.

Ferner ist es mit der erfindungsgemäßen Einrichtung möglich, die auf dem Datenträger gespeicherte Information auf der Bildwiedergabeeinrichtung wieder anzuzeigen, wobei eine einmal abgespeicherte Zeichenkombination nachträglich durch den Spieler geändert werden kann.

Ferner ist es möglich, auf dem Datenträger einen momentanen Spielkontostand zu speichern, wobei die Spieleinheit den auf dem Datenträger gespeicherten Spielkontostand liest und anzeigt. Ein Spieler kann dann z.B. sogenannte "Sofortgewinn-Spiele" an der Spieleinheit durchführen, wobei der Preis für die Spiele jeweils vom Spielkonto abgezogen wird und ein bei einem Spiel möglicherweise erzielter Gewinn zum Spielkontostand addiert wird. Dabei ist es dem Spieler möglich, zwischen verschiedenen Spielen zu wechseln, wobei für jedes Spiel das momentane Guthaben, d.h. der Spielkontostand, verwendet werden kann.

Die erfindungsgemäße Einrichtung ermöglicht es somit einem Spieler in einfacher Weise einen Tip für eine Gewinnzeichenkombination, z.B. Lottozahlen oder dgl., abzugeben und auf einem Datenträger zu speichern, wobei auf dem Datenträger eine große Anzahl von Zeichenkombinationen gespeichert werden kann, so daß auch eine Spielgemeinschaft, welche aus einer großen Anzahl von Spielern besteht, ihre gesamten Spieltips auf einem Datenträger speichern kann. Die bisher zum Ausfüllen und Quittieren einer großen Anzahl von Spielscheinen benötigte Zeit wird dadurch erheblich reduziert. Ferner kann ein Spieler in einfacher Weise zwischen einzelnen Spielarten wechseln, wobei ein einmal auf dem Datenträger registrierter Spielkontostand vom Spieler zum Durchführen verschiedener Spiele verwendet werden kann.

Um eine große Anzahl von Daten, z.B. eine große Anzahl von Spieltips, auf dem Datenträger abspeichern zu können, wird vorgeschlagen, daß der Datenträger eine Chipkarte ist.

Alternativ dazu ist es jedoch auch möglich, daß der Datenträger ein Magnetspeichermedium ist, insbesondere eine Magnetstreifenkarte, welche besonders kostengünstig herzustellen ist und sich somit für derartige Massenanwendungen besonders eignet.

Die Bildwiedergabeeinrichtung ist vorteilhafterweise ein Bildschirm. Dabei ist es bevorzugt, daß der Bildschirm als Befehlseingabeeinrichtung eine berührungsaktive Oberfläche umfaßt zur Auswahl von auf dem Bildschirm angezeigten Eingabefeldern als Eingabebefehle. Der Spieler kann somit in einfacher Weise durch Antippen der einzelnen auf dem Bildschirm angezeigten Eingabefelder, wie z. B. der Lottozahlen, Buchstaben zum Eingeben seines Namens oder dgl., die einzelnen Einbagebefehle auswählen. Eine Tastatur und/oder eine "Maus" sind somit nicht erforderlich, was insbesondere Personen, welche nicht mit dem Umgang mit einer Tastatur oder einer "Maus" vertraut sind, das Spielen erheblich vereinfacht.

Um in den einzelnen Spieleinheiten neue Spiele abspeichern zu können, bzw. in den einzelnen Spieleinheiten gespeicherte Informationen abzurufen, wird vorgeschlagen, daß die wenigstens eine Spieleinheit wenigstens zeitweise mit einer ersten zentralen Speichereinheit zum Datenaustausch verbunden ist. Die von der Spieleinheit abgerufene Information kann z.B. eine Information darüber umfassen, welches Spiel wie oft bzw. wie lange gespielt wird, so daß es dem Betreiber der Einrichtung möglich ist, Spiele, die beim Publikum keinen Anklang finden, bereits nach kurzer Zeit wieder aus dem Programm zu nehmen und durch neue Spiele zu ersetzen.

Wenn eine Mehrzahl von Spieleinheiten vorgesehen ist, ist es auch möglich, die Spieleinheiten wenigstens zeitweise zum Datenaustausch miteinander zu verbinden. Es ist somit möglich die einzelnen Spieleinheiten zum Be- und Entladen mit neuen Spielen von einer Spieleinheit aus zu bedienen.

Um neue Spiele laden zu können, wird vorgeschlagen, daß wenigstens eine Spieleinheit und/oder die erste zentrale Speichereinheit eine Datenübertragungseinrichtung umfaßt zum Übertragen von Daten in das Datenspeichermedium der wenigstens einen Spieleinheit und von dem Datenspeichermedium der wenigstens einen Spieleinheit.

Dabei ist es vorteilhaft, wenn die Datenübertragungseinrichtung eine zweite Lese/Schreib-Einrichtung umfaßt, welche z.B. Daten, die auf einer Diskette oder auf einem sonstigen Speichermedium gespeichert sind, liest bzw. auf dieses Speichermedium schreibt.

Um sicherzustellen, daß die Spieleinheit während des Durchführens der Spiele eine selbständige Einheiten ist, wird vorgeschlagen, daß die wenigstens eine Spieleinheit mit der ersten zentralen Speichereinheit nur zum Übertragen von auf dem Datenspeichermedium zu speichernden Daten oder von auf dem Datenspeichermedium gespeicherten Daten verbunden ist.

Die auf dem Datenträger gespeicherten Daten umfassen vorzugsweise einen den Datenträger identifizierenden Identifikationscode sowie ferner eine einen speziellen Spieler identifizierende Bezeichnung, insbesondere den Namen des Spielers, und/oder einen Spielkontostand, und/oder wenigstens ein spezielles Spiel betreffende Information, insbesondere einen Lotterietip. Diese auf dem Datenträger gespeicherten Daten ermöglichen es dem Spieler jederzeit, die für ihn wichtigen Informationen abzurufen und z.B. auf dem Bildschirm der Spieleinheit graphisch darzustellen, so daß der Spieler möglicherweise Änderungen eines Lotterietips durchführen kann oder lediglich seinen Spielkontostand ablesen kann.

Wenn die Einrichtung ferner wenigstens eine Kasseneinheit umfaßt, wobei die wenigstens eine Kasseneinheit eine weitere Lese/Schreib-Einrichtung umfaßt zum Lesen der auf dem Datenträger gespeicherten Daten und zum Schreiben von Daten auf den Datenträger, kann der Spieler z. B. unmittelbar vor dem Durchführen eines Sofortgewinn-Spiels einen bestimmten Geldbetrag entrichten, der dann von der Kasseneinheit zu seinem auf dem Datenträger gespeicherten momentanen Spielkontostand addiert wird. Daraufhin kann der Spieler mit dem auf dem Datenträger gespeicherten Spielkontostand an einer Spieleinheit in der o. a. Art und Weise Spiele durchführen. Ferner kann der Spieler z.B. nach Abgabe eines Lotterietips, welcher auf dem Datenträger gespeichert ist, diesen Tip quittieren lassen, so daß er an der nächsten Ziehung von Gewinnzahlen oder dgl. teilnehmen kann. Insbesondere kann der Spieler mit ein- und demselben Datenträger an mehreren Gewinnzahlziehungen teilnehmen, wobei der Spieler dann lediglich jeweils vor der Ziehung der Gewinnzahlen seinen auf dem Datenträger gespeicherten Spieltip quittieren lassen muß.

Zur verbesserten Sicherung gegen Betrug und zum vereinfachten Ermitteln von Gewinnern eines Lotteriespiels, wie z.B. Lotto, Toto oder dgl., wird vorgeschlagen, daß die wenigstens eine Kasseneinheit mit einer zweiten zentralen Speichereinrichtung zum Datenaustausch verbunden ist. Die Kasseneinheit kann somit der zweiten zentralen Speichereinrichtung die auf einem Datenträger gespeicherte Information zum Speichern übermitteln, so daß einerseits eine zusätzliche Sicherungskopie der auf dem Datenträger gespeicherten Daten vorhanden ist und andererseits eine Datenbank erstellt wird, auf welche zum Ermitteln eines Gewinners schnell zurückgegriffen werden kann.

Wenn die wenigstens eine Kasseneinheit ferner eine Anzeigeeinrichtung umfaßt zum Anzeigen von von dem Datenträger gelesenen Daten und/oder von von der zweiten zentralen Speichereinheit übertragenen Daten, kann an der Kasseneinheit schnell durch optischen Vergleich festgestellt werden, ob ein Spieler gewonnen hat und welchen Betrag er gewonnen hat. Ferner kann auf der Anzeigeeinrichtung der Kasseneinheit auch der aktuelle, auf dem Datenträger gespeicherte Spielkontostand angezeigt werden.

Vorzugsweise überträgt die Kasseneinheit wenigstens den Identifikationscode und die das wenigstens eine Spiel betreffende Information zur zweiten zentralen Speichereinrichtung. Es ist somit nach der Ziehung der Gewinnzahlen in einfacher Weise möglich, die in der zweiten zentralen Speichereinrichtung unter einem bestimmten Identifikationscode eines Datenträgers gespeicherten Zeichenkombinationen zur Kasseneinheit zu übertragen und somit durch Vergleich festzustellen, ob die auf dem Datenträger gespeicherten Zeichenkombinationen mit den unter diesem Identifikationscode in der zentralen Speichereinrichtung gespeicherten Zeichenkombinationen übereinstimmen, so daß die Gefahr eines Betrugs ausgeschlossen ist.

Um insbesondere während der Einführungsphase der erfindungsgemäßen Einrichtung sicherzustellen, daß auch noch herkömmliche Lotteriescheine verwendet werden können, wird vorgeschlagen, daß die Kasseneinheit ferner eine Leseeinrichtung zum Lesen herkömmlicher Lotteriescheine umfaßt.

Zur zusätzlichen Erleichterung des Spielvorgangs und zur Animation der Spieler wird vorgeschlagen , daß an der wenigstens einen Spieleinheit ferner eine akustische Wiedergabeeinrichtung zur akustischen Wiedergabe von das Spiel betreffender Information vorgesehen ist.

Zum Durchführen der als Sofortgewinn-Spiele bekannten Spiele wird vorgeschlagen, daß die Kasseneinheit eine einem Spielkontostand entsprechende Information auf den Datenträger schreibt, und daß die Spieleinheit den Kontostand liest und je nach momentanem Spielkontostand das Durchführen von Spielen ermöglicht, wobei die Spieleinheit bei jedem durchgeführten Spiel einen einem Preis des Spiels entsprechenden Betrag vom Spielkontostand subtrahiert. Der Spieler kann somit nachdem er an einer Kasseneinheit den von ihm gewünschten Betrag für das Spiel entrichtet hat, und dieser Betrag als sein Spielkontostand auf dem Datenträger gespeichert worden ist, an einer Spieleinheit Spiele durchführen, solange sein Spielkontostand ein Guthaben aufweist. Der Preis jedes einzelnen Spiels wird sofort vom Spielkontostand abgezogen, so daß der momentane Spielkontostand jederzeit erkennbar ist.

Um auch dann, wenn im Verlauf eines Sofortgewinn-Spiels Gewinne erzielt werden, jederzeit über den aktuellen Spielkontostand informiert zu sein, wird vorgeschlagen, daß die Spieleinheit einen bei einem Sofortgewinn-Spiel erzielten Gewinn zum momentanen Spielkontostand addiert.

Nach Beendigung des Spiels kann die Kasseneinheit den momentanen Spielkontostand lesen und einen dem momentanen Spielkontostand entsprechenden Betrag auszahlen, so daß ein Spieler sofort in den Besitz eines möglicherweise erzielten Gewinns gelangen kann.

Zum Durchführen von Lotteriespielen, bei welchen ein Tip für eine Gewinnzeichenkombination abgegeben werden muß, wird vorgeschlagen, daß die Spieleinheit wenigstens eine von einem Spieler eingegebene Zeichenkombination, insbesondere einen Lotterietip, auf den Datenträger schreibt, und daß die Kasseneinheit die wenigstens eine Zeichenkombination vom Datenträger liest und einen dem Preis des Spiels entsprechenden Betrag ermittelt, und daß die Kasseneinheit nach dem Bezahlen des dem Preis des Spiels entsprechenden Betrags oder nach Subtraktion des Preises vom momentanen Spielkontostand den Identifikationscode und wenigstens die wenigstens eine Zeichenkombination zur zweiten zentralen Speichereinrichtung zum Speichern der Daten übermittelt. Wie bereits erwähnt, ist es dem Spieler somit möglich mit ein- und demselben Datenträger jeweils vor der Ziehung der Gewinnzeichenkombination am Spiel teilzunehmen. Durch das Übertragen des Identifikationscodes und der wenigstens einen Zeichenkombination zur zweiten zentralen Speichereinrichtung wird eine Sicherungskopie der auf dem Datenträger gespeicherten Daten erstellt, so daß die Gefahr eines Betrugs durch nachträgliche Manipulation am Datenträger ausgeschlossen ist.

Um festzustellen, ob ein Spieler, der an einer Ziehung teilgenommen hat, gewonnen hat oder nicht, wird vorgeschlagen, daß in der zweiten zentralen Speichereinrichtung Information über eine Gewinnzeichenkombination gespeichert ist, und daß die Kasseneinheit den Identifikationscode des Datenträgers sowie die auf dem Datenträger gespeicherte wenigstens eine Zeichenkombination liest und mit dem von der zweiten zentralen Speichereinheit abgerufenen Identifikationscode und der entsprechenden Zeichenkombination vergleicht und bei Übereinstimmung die Zeichenkombination mit der von der zweiten zentralen Speichereinheit abgerufenen Gewinnzeichenkombination vergleicht, und dann, wenn die wenigstens eine Zeichenkombination einem Gewinn entspricht, den Gewinn auszahlt. Hat ein Spieler einen Gewinn erzielt, so kann er wiederum sofort in den Besitz seines Gewinns gelangen, oder er kann seinen Gewinn zum Spielkontostand addieren lassen, um weitere Spiele durchführen zu können.

Wenn die Kasseneinheit einen Gewinn nur bis zu einem vorbestimmten Betrag auszahlt, dann ist es nicht erforderlich, in der Kasseneinheit sehr hohe Beträge als Bargeld vorrätig zu halten, was insbesondere aus dem Gesichtspunkt der Sicherheit von Vorteil ist.

Um dem Spieler die Durchführung eines Spiels zu quittieren, wird vorgeschlagen, daß die Kasseneinheit ferner zum Erstellen eines Spielbelegs zum Quittieren eines durchgeführten Spiels ausgebildet ist.

In einfacher Weise und ohne zusätzliche Hilfsmittel kann ein Beleg dadurch erstellt werden, daß die Kasseneinheit eine einem Spielbeleg entsprechende Information auf dem Datenträger speichert.

Für den Spieler ist es vorteilhaft, wenn er einen schriftlichen Beleg hat, auf dem er jederzeit sehen kann, an welcher Ziehung er mit welchen Zeichenkombinationen teilgenommen hat. Dazu wird vorgeschlagen, daß die Kasseneinheit ferner eine Einrichtung zum Erstellen eines schriftlichen Belegs umfaßt.

Die vorliegende Erfindung bezieht sich ferner auf ein Tischelement mit einer zu einer Einrichtung zum Durchführen von Spielen, insbesondere von Gewinnspielen, insbesondere Lotteriespielen gehörenden elektronischen Spieleinheit, wobei das Tischelement insbesondere für ein modulares Tischelementsystem vorgesehen ist. Ein Beispiel für eine Einrichtung zum Durchführen von Spielen, insbesondere von Gewinnspielen, insbesondere Lotteriespielen und einer zugehörigen elektronischen Spieleinheit umfaßt eine Lese-/Schreib-Einrichtung zum Lesen und Beschreiben eines Datenträgers, insbesondere einer Chipkarte, eine Bildwiedergabeeinrichtung zur Wiedergabe von das Spiel betreffender Information sowie ggf. von von dem Datenträger gelesenen Daten und eine Befehlseingabeeinrichtung zur Eingabe von Eingabebefehlen, insbesondere von Spielbefehlen, wobei die Bildwiedergabeeinrichtung und die Befehlseingabeeinrichtung ggf. in Form eines berührungsaktiven Bildschirms ausgeführt sind.

Bei einer solchen Einrichtung zum Durchführen von Spielen tritt der Datenträger anstelle der herkömmlich verwendeten Spielscheine, wodurch der für den Spieler erforderliche Zeitaufwand zum Durchführen eines Spiels deutlich verringert ist und er leicht zwischen verschiedenen Spielen wechseln kann. Zum Durchführen eines Spiels wird die zum Spiel erforderliche Information, wie z.B. ein Lottoschein, ein Totoschein oder dgl., auf der Bildwiedergabeeinrichtung angezeigt. Der Spieler kann seine Gewinnzeichenkombination in die Spieleinheit eingeben, welche diese dann auf dem Datenträger speichert. Der Datenträger speichert ferner vorzugsweise einen den Datenträger identifizierenden Identifikationscode sowie ferner eine einen speziellen Spieler identifizierende Bezeichnung, insbesondere den Namen des Spielers und/oder einen Spielkontostand und ggf. auch weitere, ein spezielle Spiele betreffende Information. Diese auf dem Datenträger gespeicherten Daten ermöglichen es dem Spieler jederzeit, die für ihn wichtigen Informationen abzurufen und z.B. auf der Bildwiedergabeeinrichtung der Spieleinheit graphisch darzustellen, so daß der Spieler ggf. Änderungen eines Lotterietips durchführen kann oder lediglich seinen Spielkontostand ablesen kann.

Der die Spielzeichenkombination enthaltende Datenträger wird dann als "Lotterieschein" verwendet. Insbesondere ist es dabei möglich, den Datenträger als "Lotterieschein" mehrfach zu verwenden, d.h. der Spieler kann z.B. jede Woche mit dem gleichen Datenträger und der darauf gespeicherten Zeichenkombination an der Ziehung teilnehmen.

Insbesondere zum Durchführen von Lotteriespielen, bei welchen ein Tip für eine Gewinnzeichenkombination eingegeben werden muß, kann die Einrichtung zum Durchführen von Spielen wenigstens eine Kasseneinheit umfassen. Die Kasseneinheit liest wenigstens eine von einem Spieler mittels der Spieleinheit auf den Datenträger geschriebenen Zeichenkombination, insbesondere einen Lotterietip und den Namen des Spielers, woraufhin die Kasseneinheit einen den Preis des Spiels entsprechenden Betrag ermittelt oder nach Subtraktion des Preises vom momentanen Spielkontostand den Identifikationscode und wenigstens die wenigstens eine Zeichenkombination zu einer zentralen Speichereinrichtung zum Speichern der Daten übermittelt. Hierdurch hat der Spieler einen Tip wirksam abgegeben. Stellt sich nach einer Ziehung heraus, daß der Spieler gewonnen hat, so kann er sich den Gewinn auszahlen lassen oder er kann seinen Gewinn zu dem auf dem Datenträger gespeicherten Spielkontostand addieren lassen, um weitere Spiele durchführen zu können.

In einem Spiellokal (Spielhalle, Lotto-Annahmestelle, Wettlokal und ähnliches), das mit einer entsprechenden Einrichtung zum Durchführen von Spielen ausgestattet werden soll, müssen eine oder mehrere elektronische Spieleinheiten möglichst platzsparend installiert werden, wobei der finanzielle Aufwand möglichst gering sein sollte. Es soll daher ein Tischelement mit einer derartigen elektronischen Spieleinheit bereitgestellt werden, das preiswert gefertigt werden kann und das platzsparend und sich an unterschiedliche Raumverhältnisse anpassend aufgestellt werden kann.

Erfindungsgemäß umfaßt das Tischelement ein Fußteil, ein Säulenteil und ein die Spieleinheit aufnehmendes Tischteil, wobei die von dem Säulenteil abgelegene Vorderkante des Tischteils einem um eine Säulenachse zentrierten Kreisbogen folgt oder einer Seite eines um die Säulenachse zentrierten regelmäßigen Vielecks entspricht und wobei die von der Vorderkante zum Säulenteil führenden beiden Seitenkanten des Tischteils jeweils in einer die Säulenachse enthaltenen Seitenebene liegen und die beiden Seitenebenen einen Sektorwinkel einschließen, der einem n-ten Teil von 360° entspricht (n = natürliche Zahl).

Das erfindungsgemäße Tischelement besteht nur aus drei Teilen, und kann deshalb wirtschaftlich gefertigt werden. Es lassen sich 1 bis n Tischelemente Seitenkante an Seitenkante nebeneinander aufstellen, wobei zwischen den Tischelementen kein Platz verschenkt wird, so daß die Tischelemente nur wenig Raum einnehmen. Sollen die Tischelemente frei stehen, so wird man für eine optimale Raumausnutzung n Tischelemente auf diese Weise nebeneinander aufstellen. An einer Anordnung aus n Tischelementen können dann n Personen gleichzeitig spielen.

Der Sektorwinkel beträgt zweckmäßigerweise 90°. Diese Wahl bietet ausreichende Flexibilität und es lassen sich zwei bis vier Tischelemente auf die genannte Weise nebeneinander aufstellen. Ein einzelnes Tischelement wird man im Normalfall in eine Raumecke stellen, wodurch dieser häufig schlecht nutzbare Platz sinnvoll genutzt ist. Den Platz an einer Raumwand kann man besonders günstig durch zwei Tischelemente ausnutzen. Den Platz an einer Säule o. ähnlichem kann man durch drei Tischelemente nutzen. In die Mitte eines Raumes wird man vier Tischelemente nebeneinander aufstellen.

Es ist bevorzugt, daß der Umriß des Tischteils und der Umriß des Fußteils in Projektion auf eine Ebene senkrecht zum Säulenteil im wesentlichen trapezförmig ist entsprechend einem jeweiligen gleichschenkligen Umrißtrapez. Das Säulenteil weist bevorzugterweise eine vertikale Seitenfläche auf, deren Breite in Höhe des Tischteils im wesentlichen der Länge der kürzeren Grundlinie des Umrißtrapezes des Tischteils entspricht und dessen Breite in der Höhe des Fußteils im wesentlichen der Länge der kürzeren Grundlinie des Umrißtrapezes des Fußteils entspricht.

Das einzelne Tischelement braucht bei dieser Gestaltung besonders wenig Platz, wobei das einzelne Tischelement bzw. eine Anordnung aus zwei, drei oder vier Tischelementen ästhetisch ansprechend ist.

Es wird vorgeschlagen, daß das Säulenteil als Profilelement ausgebildet ist mit einem die Seitenfläche festlegenden Mittelteil und jeweils einem Randfalz an beiden vertikalen Rändern des Mittelteils, die von der Seitenfläche wegweisen und jeweils einen Winkel von 45° mit dem Mittelteil einschliessen.

Die Randfalze ermöglichen eine einfache und schnelle Befestigung von zwei, drei oder vier Säulenteilen miteinander. Bei einem einzelnen Tischelement, das in einer Raumecke angeordnet ist, dienen die Randfalze zur Anlage an einer jeweiligen Raumwand. Ein derartiges Säulenteil kann preisgünstig gefertigt werden.

Es wird vorgeschlagen, daß das Tischteil und das Fußteil jeweils im Bereich der kürzeren Grundlinie des jeweiligen Umrißtrapezes wenigstens einen vertikalen Randfalz aufweisen, mit dem sie mit dem Säulenteil an der einen Seitenfläche lösbar verbunden sind.

Das Tischteil, das Fußteil und das Säulenteil eines Tischelements brauchen dann erst im Spiellokal zusammengesetzt werden, wodurch ein raumsparender Transport und eine raumsparende Lagerung beim Produzenten oder bei einem Zwischenhändler möglich ist. Die Ausführung des Tischteils und des Fußteils mit Randfalzen zur Befestigung ermöglicht eine preisgünstige Fertigung und ein einfaches Zusammenbauen der Einzelteile.

Um die Tischteile und die Fußteile eines Aufbaus von zwei, drei oder vier Tischelementen miteinander auf einfache Weise verbinden zu können, wird vorgeschlagen, daß das Tischteil und das Fußteil in den Bereichen der Schenkel ihres jeweiligen Umrißtrapezes wenigstens einen vertikalen Seitenrandfalz aufweisen.

Es ist bevorzugt, daß das Tischteil eine obere pultartig geneigte Fläche aufweist. In diese obere Fläche können die Bildwiedergabeeinrichtung, die Befehlseingabeeinrichtung und die Lese-/Schreib-Einrichtung eingelassen sein, die damit gut zugänglich und gut sichtbar für einen Spieler sind und darüberhinaus auch ergonomisch günstig angeordnet sind. Auch aus der Entfernung läßt sich erkennen, daß es sich bei der Tischeinheit nicht um ein Schreibpult oder dgl. handelt, wodurch u.U. Interesse bei bisher noch nicht mit der elektronischen Spieleinheit spielenden Personen geweckt wird.

Das Tischteil kann eine untere Fläche aufweisen mit zur Neigung der oberen Fläche entgegengesetzter Neigung. Hierdurch wird ein Zugriff durch Unbefugte auf die Rückseite der elektronischen Spieleinheit und eventuell dort angeschlossene Versorgungs- und/oder Datenverbindungskabel verhindert.

Das Fußteil kann ggf. eine pultartig geneigte Oberfläche aufweisen. Das Fußteil kann damit besonders stabil und Querkräfte am Säulenteil sicher aufnehmend ausgebildet sein, ohne wuchtig zu wirken. Insgesamt ist damit ein formschönes Tischelement bereitgestellt.

Das Tischelement kann einen Datenträgerspender zur Abgabe von Datenträgern, insbesondere von Chipkarten umfassen, welcher Datenträgerspender die Datenträger unentgeltlich oder entgeltlich, insbesondere nach Einwurf einer Münze, abgibt. Es ist bevorzugt, daß der Datenträgerspender oberhalb des Tischteils in das Säulenteil aufgenommen ist.

Hierdurch kann der Spieler selbst auf die für das Spiel benötigten Datenträger zugreifen, ohne daß Personal zur Ausgabe der Datenträger nötig ist. Insbesondere eine sich für das Spiel interessierende Person noch ohne Datenträger hat den Datenträgerspender direkt vor sich, so daß diese Person zum Durchführen eines Spieles animiert wird. Bei der Anordnung des Datenträgerspenders im Säulenteil ist auch der von dem Säulenteil eingenommene Platz gut ausgenutzt, so daß die Tischteile etwas kleiner sein können, wodurch der Platz im Spiellokal besonders gut ausgenutzt werden kann.

Das Tischteil und/oder das Fußteil können an das Säulenteil angeschraubt sein. Eine derartige Befestigung ist einfach und erfordert nur einfaches Werkzeug. Das Tischteil und/oder das Fußteil können aber auch mittels Schlüsselloch-Kopfbolzen-Verbindungen und/oder mittels durch Löcher im Randfalz und im Säulenteil hindurchgreifende Schnellspannelemente miteinander verbunden sein. Eine derartige Verbindung ist besonders schnell hergestellt und es werden hierfür keine Werkzeuge benötigt.

Es wurde schon erwähnt, daß zwei, drei oder vier Tischelemente einen Aufbau bilden können, wobei die Tischteile jeweils paarweise mit ihren Seitenkanten unmittelbar benachbart angeordnet sind. Bei einem derartigen Aufbau ist es bevorzugt, daß die Säulenteile Randfalze aufweisen, daß die Tischteile und die Fußteile Seitenrandfalze aufweisen, daß die Tischteile und die Fußteile jeweils paarweise an ihren Seitenrandfalzen lösbar miteinander verbunden sind und daß die Säulenteile paarweise mit ihren Randfalzen lösbar miteinander verbunden sind. Besonders bevorzugt ist, daß die Tisch-, Fuß- und/oder Seitenteile mittels Schlüsselloch-Kopfbolzen-Verbindungen und/oder mittels durch Löcher in den Falzen hindurchgreifende Schnellspannelemente miteinander verbunden sind.

Durch diese Maßnahmen ist ein einfacher und schneller Aufbau einer Anordnung von Tischelementen möglich, wobei keine Werkzeuge benötigt werden und eine sichere Verbindung der Tischelemente gewährleistet ist.

Die Tisch-, Fuß- und/oder Seitenteile können auch, ggf. zusätzlich, mittels Aufschiebeprofilen verbunden sein. Bevorzugterweise greifen die Aufschiebprofile dabei in Nuten ein, die die Aufschiebeprofile in bezug auf die zu verbindenden Teile festlegen.

Nach außen sichtbare Aufschiebeprofile können gleichzeitig als Zierprofile ausgebildet sein und etwaige scharfe Kanten abdecken. Es wird hierdurch eine sehr sichere Verbindung zwischen den Tischelementen erreicht. Aufschiebprofile lassen sich z.B. auch völlig problemlos über unmittelbar benachbarte Randfalze der Säulenteile einer Viereranordnung aus Tischelementen überschieben.

Die Erfindung wird im folgenden an bevorzugten Ausführungsbeispielen anhand der Zeichnungen erläutert.
Es zeigt:
- Fig. 1: zwei erfindungsgemäße Spieleinheiten, welche mit einer ersten zentralen Speichereinheit verbunden sind;
- Fig. 2: zwei mit einer zweiten zentralen Speichereinheit verbundene Kasseneinheiten;
- Fig. 3: eine perspektivische Ansicht einer erfindungsgemäßen Zweieranordnung aus erfindungsgemäßen Tischelementen an einer Raumwand;
- Fig. 4: ein einzelnes erfindungsgemäßes Tischelement in einer Raumecke;
- Fig. 5a-5d: die bevorzugten erfindungsgemäßen Anordnungen von einem, zwei, drei oder vier erfindungsgemäßen Tischelementen;
- Fig. 6 und 7: perspektivische Hinteransichten auf ein Tischteil und ein Fußteil nach einer bevorzugten Ausführungsform;
- Fig. 8: eine Vorderansicht eines Säulenteils, an das das Tischteil und das Fußteil der Fig. 4 und 5 angebracht werden können;
- Fig. 9a und 9b: veranschaulichen den Zusammenbau von zwei Teilen mittels eines Schnellspannelements;
- Fig. 10: ist eine teilgeschnittene Sicht in axialer Richtung auf zwei durch ein Schnellspannelement verbundene Säulenteile;
- Fig. 11a: zeigt einen Randfalz eines Säulenteils mit zwei Löchern für jeweils ein Schnellspannelement und zwei doppelt-schlüssellochartig geformten Langlöchern zur Aufnahme jeweils eines Kopfbolzens einer Schlüsselloch-Kopfbolzen-Verbindung;
- Fig. 11b: zeigt einen anderen Randfalz eines Säulenteils mit zwei Löchern für jeweils ein Schnellspannelement und zwei Kopfbolzen einer Schlüsselloch-Kopfbolzenverbindung;
- Fig. 11c: zeigt die Randfalze der Fig.11a und Fig.11b in verbundenem Zustand;
- Fig. 12: veranschaulicht die Verbindung von zwei Teilen mittels Aufschiebeprofilen am Beispiel von zwei Säulenteilen; und
- Fig. 13: zeigt die bevorzugte Reihenfolge des Zusammenbaus eines Aufbaus von erfindungsgemäßen Tischelementen.

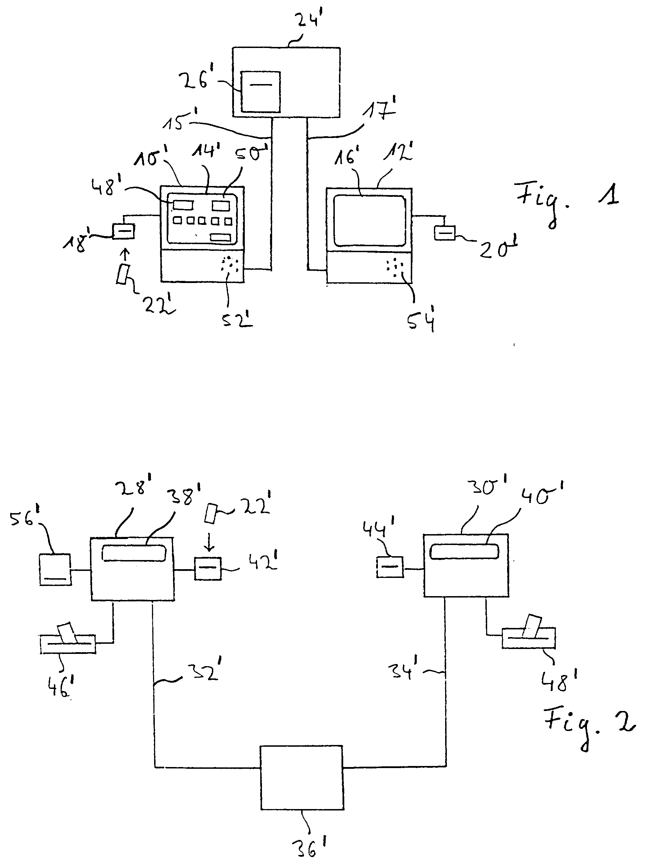

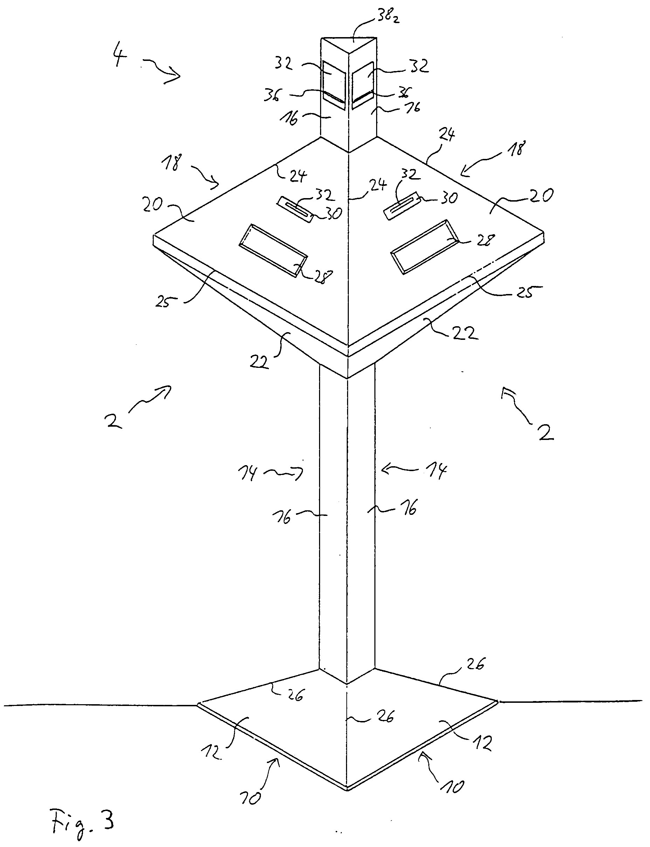

In Figur 1 sind erfindungsgemäße Spieleinheiten mit 10' bzw. 12' bezeichnet. Die Spieleinheiten 10', 12' umfassen jeweils einen Bildschirm 14', 16' sowie einen nicht dargestellten Datenspeicher, z. B. eine Festspeicherplatte, und eine zentrale Recheneinheit (ebenfalls nicht dargestellt). Ferner sind die Spieleinheiten 10', 12' jeweils mit Kartenlesern 18', 20' verbunden, in welche jeweils eine als Datenträger verwendete Karte 22' eingeschoben werden kann. Die Karte 22' umfaßt vorzugsweise eine Chipkarte, auf welcher in einem Halbleiterspeichermedium (nicht dargestellt) Daten gespeichert werden können, welche von den Lese/Schreib-Einrichtungen 18', 20' gelesen werden können.

Ferner sind die Spieleinheiten 10', 12' jeweils über Datenleitungen 15', 17' mit einer ersten zentralen Speichereinrichtung 24' verbunden, um in einer nachfolgend noch detaillierter zu beschreibenden Art und Weise Daten in die Speichermedien der Spieleinheiten 10', 12' zu übertragen, bzw. aus diesen auszulesen.

Insbesondere weist die erste zentrale Speichereinheit eine zweite Lese/Schreib-Einrichtung 26' auf, welche z.B. ein Diskettenlaufwerk sein kann. Über die zweite Lese/Schreib-Einrichtung 26' können in die erste zentrale Speichereinheit 24' Daten eingeladen werden, welche z.B. Information für ein neues Spiel betreffen. Diese Daten können dann während einer Zeit, in der an den Spieleinheiten 10',12' keine Spiele durchgeführt werden, insbesondere während der Nacht oder nach Ladenschluß, zu den einzelnen Spieleinheiten 10', 12' übertragen werden und dort auf den jeweiligen Datenspeichermedien gespeichert werden, so daß bei Wiederaufnahme des Spielbetriebs die neuen Spiele für das Publikum zur Verfügung stehen.

Zum nachfolgend noch detaillierter beschriebenen Durchführen verschiedener Spiele sind die Spieleinheiten 10', 12' jedoch nicht zum Datenaustausch mit der ersten zentralen Speichereinheit 24' verbunden, so daß die Spieleinheiten 10', 12' im wesentlichen autarke Einheiten bilden.

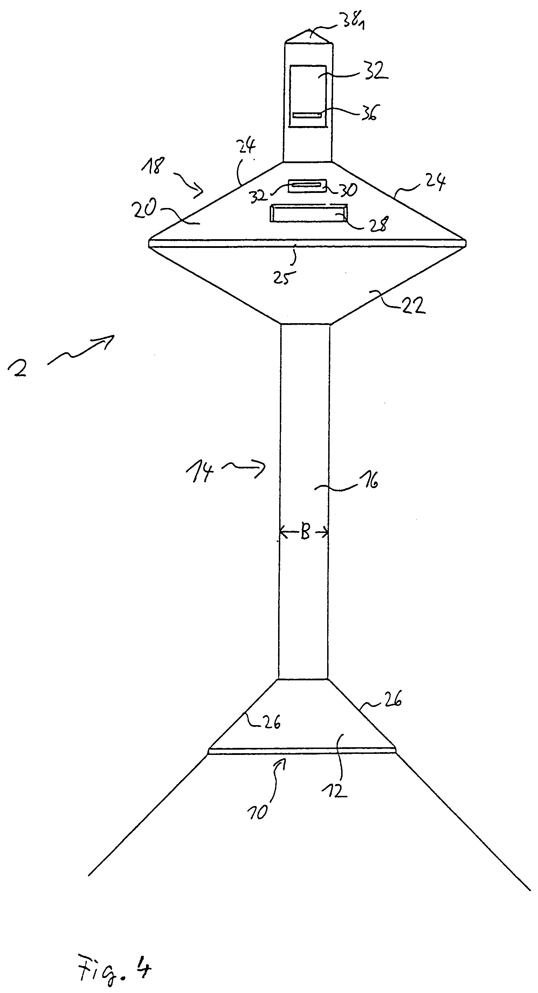

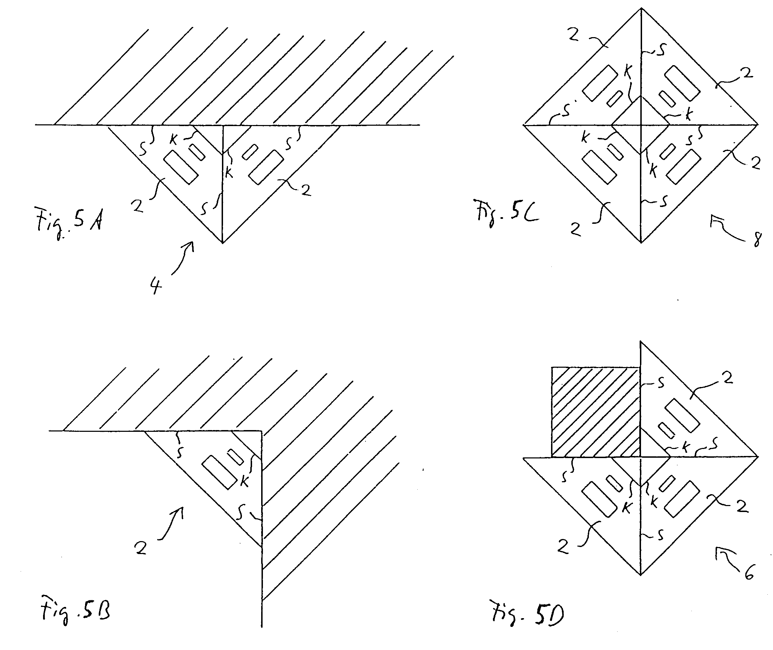

In Fig. 2 sind Kasseneinheiten jeweils mit 28' und 30' bezeichnet. Die z.B. in einer Lotterieannahmestelle aufgestellten Kasseneinheiten 28', 30' sind jeweils über Datenleitungen 32', 34' mit einer zweiten zentralen Speichereinheit 36', z.B. der zentralen Datenbank einer Lotteriegesellschaft, verbunden. Ferner weisen die Kasseneinheiten 28', 30' jeweils Anzeigeeinrichtungen 38', 40' auf, welche z.B. Flüssigkristall- (LCD) Anzeigen sein können. An die Kasseneinheit 28', 30' sind jeweils Lese/Schreib-Einrichtungen 42', 44' angeschlossen, über welche die auf der Chipkarte 22' gespeicherten Daten in die Kasseneinheit eingelesen werden können bzw. Daten von der Kasseneinheit 28' bzw. 30' auf die Chipkarte 22' geschrieben werden können.

Ferner sind an die Kasseneinheiten 28', 30' jeweils Drucker 46', 48' angeschlossen zur Ausgabe eines gedruckten Spielbelegs.

Nachfolgend wird zunächst die Durchführung von Gewinnspielen wie z.B. Lotteriespielen, bei welchen der Spieler an einer zu einem festen Zeitpunkt stattfindenden Ziehung teilnimmt, mittels der erfindungsgemäßen Einrichtung beschrieben. Der Spielvorgang wird mit Bezug auf die in Fig. 1 dargestellte Spieleinheit 10' beschrieben. Der Spieler nimmt zunächst eine Chipkarte 22' und schiebt diese in die Lese/Schreib-Einrichtung 18' der, z.B. in einer Lotterieannahmestelle aufgestellten, Spieleinheit 10'. Auf dem Bildschirm 14' der Spieleinheit 10' ist zunächst ein Bild angezeigt, das den Spieler zum Spiel einlädt. Der Spieler wählt ein bestimmtes Spiel, z.B. ein Lottospiel, aus, indem er ein entsprechendes Eingabefeld 48', das auf dem Bildschirm angezeigt ist, berührt. Der Bildschirm 14' weist eine berührungsaktive Oberfläche 50' auf und registriert die Auswahl des Eingabefelds 48' als Eingabebefehl. Daraufhin wird am Bildschirm 14' die zum Durchführen des ausgewählten Spiels erforderliche Information angezeigt, d.h. z. B. ein Lottoschein im Falle der Auswahl eines Lottospiels.

Über verschiedene weitere, in den Fig. nicht dargestellte Eingabefelder kann der Spieler dann einzelne Segmente aus dem Lottoschein vergrößern und somit wiederum durch Eingabe mittels Auswahl bestimmter Eingabefelder auf dem Bildschirm seinen Tip für die Gewinnzeichenkombination angeben. Ferner kann der Spieler in einem extra dafür vorgesehenen Abschnitt seinen Namen und möglicherweise auch seine Adresse eingeben.

Jede der Karten 22' enthält einen Identifikationscode, z.B. eine Zahlenkombination, welche die Karte 22' identifiziert, und welche z.B. auch als die Losnummer für das Spiel 77 oder dgl. verwendet werden kann. Alternativ dazu ist es jedoch auch möglich, daß der Spieler auf dem Bildschirm 14' verschiedene "Lottoscheine" durchblättern kann, auf welchen jeweils eine Losnummer für das Spiel 77 angegeben ist, so daß jeder Spieler sich eine beliebige Losnummer aus den verschiedenen im Speichermedium der Spieleinheit abgespeicherten "Lottoscheinen" auswählen kann.

An den Spieleinheiten 10', 12' sind ferner Lautsprecher 52', 54' vorgesehen, welche den Spielvorgang akustisch untermalen und den Spieler z.B. durch akustische Signale auf ein fehlerhaftes Ausfüllen eines Feldes hinweisen können.

Nachdem der Spieler auf diese Art und Weise einen oder mehrere Spielscheine ausgefüllt hat, werden diese über die Lese/Schreib-Einrichtung 18' auf die Karte 22' geschrieben und der Spieler kann die Karte 22' entnehmen.

Um mit dem nunmehr abgegebenen Tip für die Gewinnzeichenkombination an der Ziehung teilnehmen zu können, schiebt der Spieler die Karte 22' nunmehr in die Lese/Schreib-Einrichtung 42' der Kasseneinheit 28'. Die Lese-/Schreib-Einrichtung 42' liest die auf der Karte 22' gespeicherten Daten, insbesondere den Identifikationscode, den Namen und die darauf gespeicherten "Spielscheine", d.h. die vom Spieler abgegebenen Tips für die Gewinnzeichenkombination. Die Kasseneinheit 28' errechnet den Preis des Spiels und zeigt diesen auf der Anzeigeeinrichtung 38' an. Nachdem der Spieler den Preis für das Spiel bezahlt hat, oder nachdem der Preis für das Spiel von einem auf der Karte 22' ebenfalls gespeicherten Spielkontostand (nachfolgend beschrieben) abgezogen worden ist, überträgt die Kasseneinheit 28' den Identifikationscode, die auf der Karte 22' gespeicherten Tips für die Gewinnzeichenkombinationen und ggf. auch den auf der Karte 22' gespeicherten Namen des Spielers zur zweiten zentralen Speichereinheit 36', in welcher die Daten gespeichert werden.

Die Übertragung der Daten kann entweder sofort nach dem Quittieren durch die Kasseneinheit erfolgen, oder die Daten können in der Kasseneinheit zwischengespeichert werden und z.B. nach Ladenschluß als Datenpaket aller im Verlauf eines Tages zwischengespeicherten Daten zur zweiten zentralen Speichereinheit übertragen werden.

Ferner schreibt die Kasseneinheit 28' auf die Karte 22' eine Information, die einer Quittung für das bezahlte Spiel entspricht sowie ggf. den neuen Spielkontostand. Der an die Kasseneinheit 28' ebenfalls angeschlossene Drucker 46' erstellt einen Spielbeleg, der ebenfalls als Quittung für das bereits bezahlte Spiel dient und auf dem zusätzlich die vom Spieler abgegebenen Tips für die Gewinnzeichenkombination zu lesen sind.

Nach der Ziehung der Gewinnzeichenkombination wird diese zunächst in der zweiten zentralen Speichereinheit 36' abgespeichert. Der Spieler kann nun, nachdem er möglicherweise die Ziehung beobachtet hat und weiß, daß er einen Gewinn erzielt hat, die Karte 22' wiederum in die Lese/Schreib-Einrichtung 42' einschieben, welche die auf der Karte 22' gespeicherten Daten liest und zur Kasseneinheit 28' überträgt. Die Kasseneinheit 28' erhält somit Information über den Identifikationscode der Karte 22' und über die vom Spieler abgegebenen Tips für die Gewinnzeichenkombination.

Erhält die Kasseneinheit 28' ferner die Information, daß das Spiel quittiert ist und somit für die zuletzt durchgeführte Ziehung gültig war, vergleicht sie den Identifikationscode und die Tips für die Gewinnzeichenkombination mit dem von der zweiten zentralen Speichereinheit 36' übertragenen Identifikationscode und den entsprechenden, unter diesem Code in der zweiten zentralen Speichereinrichtung abgespeicherten und zur Kasseneinheit 28' übertragenen Zeichenkombinationen. Wenn der von der Karte 22' gelesene Identifikationscode mit dem von der zentralen Speichereinheit 36' gelesenen Identifikationscode übereinstimmt und die von der Karte 22' gelesenen Zeichenkombinationen mit den von der zweiten zentralen Speichereinheit 36' gelesenen Zeichenkombinationen übereinstimmen, dann vergleicht die Kasseneinheit 28' die von der Karte 22' gelesenen Zeichenkombinationen mit der in der letzten Ziehung gezogenen Gewinnzeichenkombination, welche die Kasseneinheit 28' ebenfalls von der zweiten zentralen Speichereinheit 36' liest, und stellt fest, ob eine oder mehrere der von der Karte 22' gelesenen Zeichenkombinationen wenigstens teilweise mit der von der zweiten zentralen Speichereinheit 36' gelesenen Gewinnzeichenkombination übereinstimmen.

Ist dies der Fall, so zeigt die Anzeigeeinrichtung 38' der Kasseneinheit 28' die Art des Gewinns, z. B. im Falle eines Lottospiels eine Drei, eine Vier, eine Fünf, usw. sowie die Höhe des Gewinns an. Die Kasseneinheit 28' zahlt dem Spieler dann den Gewinn aus oder addiert diesen zum Spielkontostand auf der Karte 22', so daß der Spieler mit dem auf der Karte 22' gespeicherten Spielkontostand weitere Spiele bezahlen kann. Übersteigt der Gewinn einen bestimmten Betrag, so zahlt die Kasseneinheit diesen Betrag nicht mehr aus, und der in der zweiten zentralen Speichereinheit 36' unter seinem Namen und Identifikationscode der Karte 22' gespeicherte Spieler, der einen entsprechend hohen Gewinn erzielt hat, wird von der Lotteriegesellschaft direkt informiert.

Der Spieler kann die Karte 22' zur nächsten Ziehung wiederverwenden, indem er sie einfach in die Lese/Schreib-Einrichtung 42' der Kasseneinheit 28' schiebt, von welcher nach Bezahlen oder Abbuchen eines dem Preis des Spiels entsprechenden Betrags das Spiel für die nächste Ziehung quittiert wird. Ferner kann der Spieler die Karte 22' in die Lese/Schreib-Einrichtung 18' der Spieleinheit 10' einschieben und sich auf dem Bildschirm 14' den oder die auf der Karte 22' abgespeicherten Tips für die Gewinnzeichenkombination ansehen und ggf. Änderungen durchführen. Die Änderungen werden wiederum auf der Karte 22' gespeichert, so daß der Spieler nunmehr mit den nach der letzten Änderung auf der Karte 22' gespeicherten Zeichenkombinationen nach dem Bezahlen und Quittieren an der Kasseneinheit 28' an der nächsten Ziehung teilnehmen kann.

Die erfindungsgemäße Einrichtung ermöglicht es somit dem Spieler in einfacher Weise durch Auswahl entsprechender Anzeigefelder auf einem Bildschirm einen "Lotterieschein" auszufüllen und diesen auf einem Datenträger, wie z.B. einer Chipkarte, abzuspeichern. Mit ein- und demselben Datenträger kann der Spieler nunmehr an mehreren Ziehungen teilnehmen, so daß das wiederholte Ausfüllen von Spielscheinen nicht mehr erforderlich ist.

Ferner ist es möglich, daß der Spieler an der Spieleinheit 10' eine Spielart auswählt, bei der z.B. ein Lottoschein für eine vorbestimmte Anzahl von Ziehungen gültig ist, so daß der Spieler den für diese vorbestimmte Anzahl von Ziehungen fälligen Preis mit einem Mal an der Kasseneinheit 28' bezahlen kann und eine Annahmestelle lediglich dann aufsuchen muß, wenn er einen Gewinn gemacht hat.

Nachfolgend wird die Art und Weise beschrieben, in welcher mittels der erfindungsgemäßen Einrichtung sogenannte "Sofortgewinn-Spiele" durchgeführt werden können. Derartige Spiele umfassen z.B. die als Rubbelspiel oder Quick-Tip bekannten Spiele, bei welchen unmittelbar nach Durchführung des Spiels feststeht, ob der Spieler einen Gewinn erzielt hat oder nicht.

Dabei schiebt der Spieler zunächst eine Chipkarte 22' in die Lese/Schreib-Einrichtung 42' der Kasseneinheit 28' und bezahlt einen durch den Spieler auswählbaren Preis, welcher dann als Spielkontostand auf der Karte 22' abgespeichert wird. Der Spieler schiebt nunmehr die Karte 22' in die Lese-/Schreib-Einrichtung 18' der Spieleinheit 10', welche den auf der Karte 22' verzeichneten Spielkontostand liest. Dieser Spielkontostand wird auf dem Bildschirm 14' angezeigt, so daß der Spieler auch während des Spiels jederzeit über seinen momentanen Spielkontostand informiert ist. Beim Durchführen eines Spiels wird der für das Spiel fällige Preis jeweils sofort vom momentanen Spielkontostand subtrahiert bzw. ein möglicherweise beim Spiel erzielter Gewinn sofort zum momentanen Spielkontostand addiert.

Der Spieler kann mit seinem Guthaben ein beliebiges, auf dem Bildschirm 14' der Spieleinheit 10' angezeigtes Spiel auswählen und die Spiele beliebig oft wechseln. Insbesondere kann der Spieler auch mit dem auf der Karte 22' gespeicherten Spielkontostand z.B. ein Lotto- oder Totospiel bezahlen. Nach Beenden des Spiels liest die Lese-/Schreib-Einrichtung 42' der Kasseneinheit 28' wiederum den auf der Karte 22' gespeicherten momentanen Spielkontostand, und dieser Spielkontostand wird auf der Anzeigeeinrichtung 38' angezeigt. Der Spieler kann sich diesen Spielkontostand nunmehr als Geld auszahlen lassen bzw. kann nach erneutem Bezahlen einen bestimmten Betrag als neuen Spielkontostand auf der Karte 22' speichern lassen.

Diese Art von Spielen kann z.B. auch Spiele umfassen, die im allgemeinen als Videospiele bekannt sind und bei welchen der Spieler keinen Gewinn erzielen kann. Der Preis für das jeweilige Spiel wird dann wiederum sofort von dem auf der Karte 22' gespeicherten momentanen Spielkontostand subtrahiert und der Spieler kann solange spielen, bis der auf der Karte 22' gespeicherte momentane Spielkontostand kleiner ist als der Preis des Spiels.

Insbesondere wenn mehrere Spieleinheiten in einem Spielsalon aufgestellt sind, ist es denkbar, die Spieleinheiten untereinander zu vernetzen, um z.B. die in den Spieleinheiten gespeicherten Gewinnzeichenkombinationen verschiedener Gewinnspiele in allen Spieleinheiten ändern zu können, wenn bei einer der Spieleinheiten die entsprechende momentan gültige Gewinnzeichenkombination von einem Spieler "gezogen" worden ist.

Bei der Verwendung der erfindungsgemäßen Einrichtung in Spielsalons, in welchen im wesentlichen Sofortgewinnspiele durchgeführt werden, ist es ferner möglich, daß die Spieleinheit auch die Kasseneinheit umfaßt. Der Spieler kann dann an dieser Einheit zunächst seinen Einsatz entrichten und diesen auf der Chipkarte als Spielkontostand gutschreiben lassen. Dabei ist es auch möglich, daß dem Spieler Chipkarten angeboten werden, die bereits einen bestimmten Spielkontostand enthalten, und welche der Spieler durch Bezahlen des dem Spielkontostands entsprechenden Betrags löst. Darauffolgend kann der Spieler an der selben Einheit das Spiel aufnehmen. Er kann jedoch auch die Chipkarte aus der Lese/Schreib-Einrichtung dieser Spiel/Kasseneinheit herausziehen und das Spiel an einer ander Spieleinheit oder zu einem anderen Zeitpunkt aufnehmen oder fortsetzen. Die Funktion dieser Spiel/Kasseneinheit entspricht im wesentlichen der mit Bezug auf die Figuren beschriebenen Spiel- und Kasseneinheiten.

An der Kasseneinheit 28' kann ferner eine Leseeinrichtung 56' vorgesehen sein, mittels welcher herkömmliche Lotteriescheine gelesen werden können. Dies ermöglicht insbesondere während der Einführungsphase der erfindungsgemäßen Einrichtung die zusätzliche Verwendung herkömmlicher Lotteriescheine.

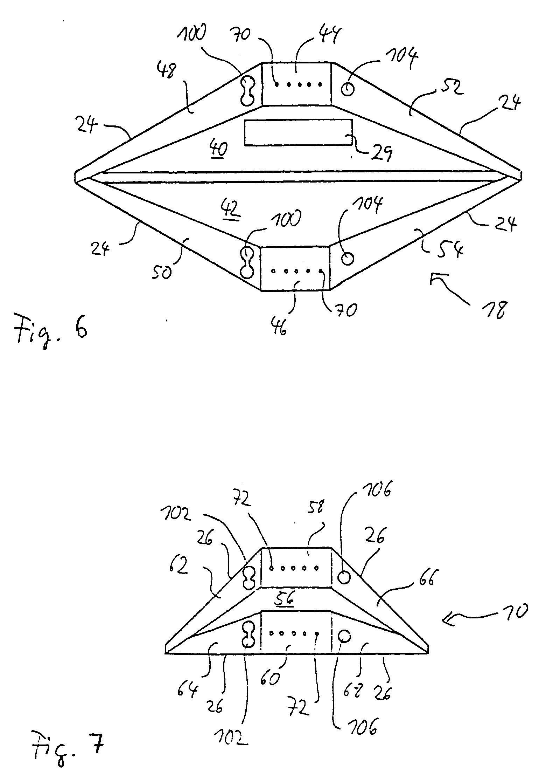

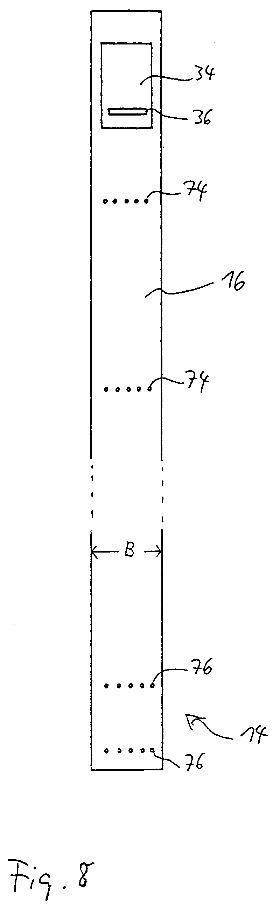

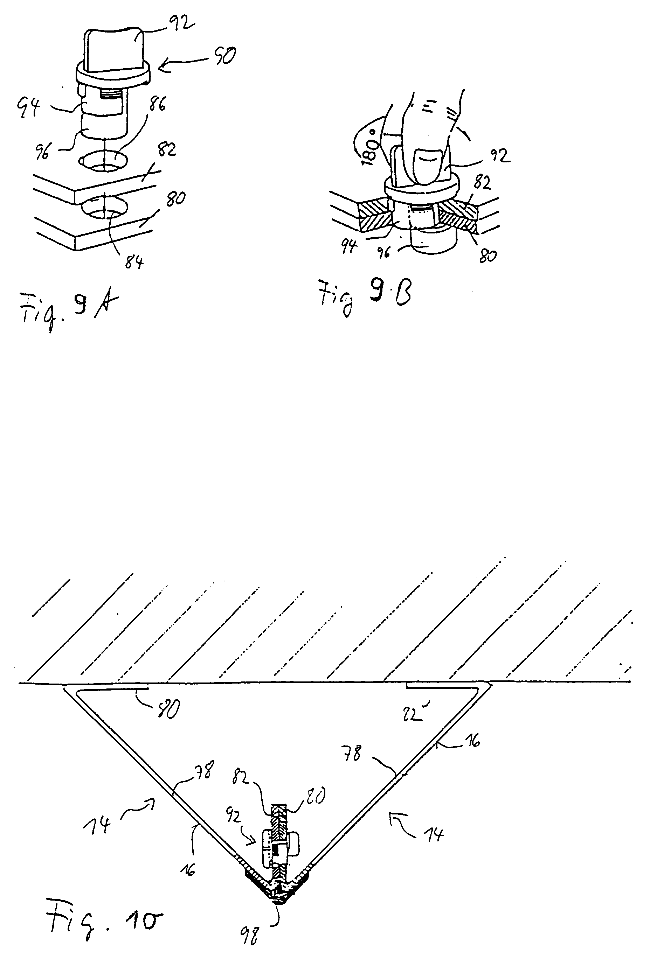

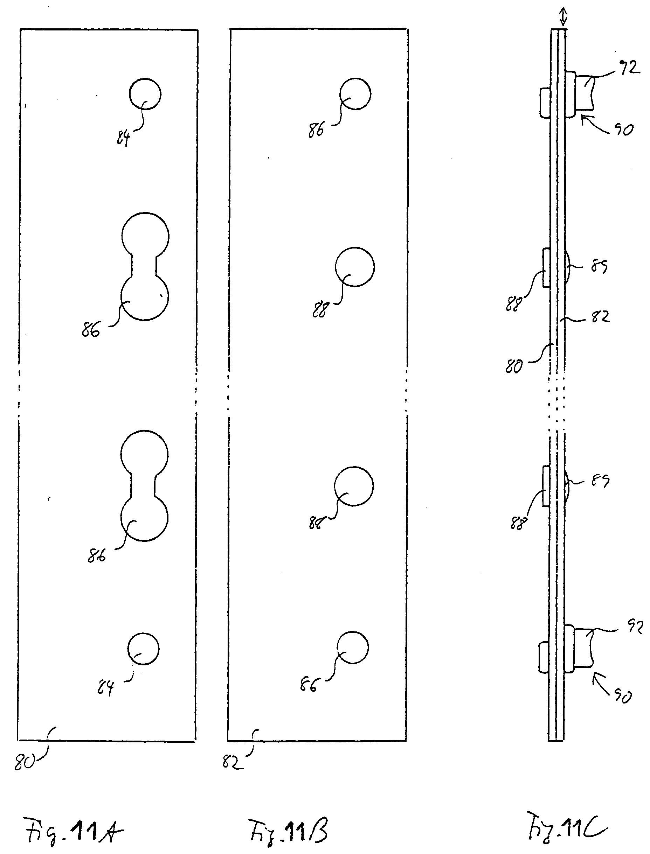

Fig. 3 und Fig. 4 zeigen ein einzelnes erfindungsgemäßes Tischelement 2 bzw. einen erfindungsgemäßen Aufbau 4 aus zwei erfindungsgemäßen Tischelementen 2. Die erfindungsgemäßen Aufbauvarianten sind in den Draufsichten zeigenden Fig. 5a bis 5d veranschaulicht. Ein Aufbau 4 von zwei Tischelementen 2 läßt sich besonders platzsparend an einer Raumwand (in Fig. 5a im Schnitt gezeigt) anordnen. Ein erfindungsgemäßer Aufbau 6 von drei erfindungsgemäßen Tischelementen 2 kann den Platz an einer Säule (in Fig. 5d im Schnitt gezeigt) ausnutzen. Ein erfindungsgemäßer Aufbau 8 von vier erfindungsgemäßen Tischelementen 2 ist besonders sinnvoll für eine freistehende Anordnung.

Ein Tischelement nach der gezeigten Ausführungsform umfaßt ein Fußteil 10 mit einer pultartig geneigten Oberfläche 12, ein Säulenteil 14 mit einer vertikalen Seitenfläche 16 und ein Tischteil 18 mit einer pultartig geneigten oberen Fläche 20 und einer entgegengesetzt geneigten unteren Fläche 22. Bei der gezeigten Ausführungsform sind die Neigungswinkel der oberen und der unteren Fläche vom Betrag her gleich. Die Flächen können aber auch betragsmäßig unterschiedlich geneigt sein.

Das Tischteil 18 und das Fußteil 10 haben in Projektion auf eine horizontale Ebene im wesentichen einen trapezförmigen Umriß entsprechend einem jeweiligen gleichschenkeligen Umrißtrapez, was sich für das Tischteil 18 besonders gut in den Fig. 3a-3d erkennen läßt. Die Schenkel S der jeweiligen Umrißtrapeze schließen in Verlängerung einen rechten Winkel ein und die Länge der kürzeren Grundlinie K entspricht im wesentlichen der Breite B der vertikalen Seitenfläche 16 des Säulenteils 14. Bei der gezeigten Ausführungsform hat die vertikale Seitenfläche 16 über die Länge des Säulenteils 14 eine konstante Breite B. Es ist aber auch denkbar, daß die Breite B sich über die Länge des Säulenteils ändert, insbesondere, daß die Seitenfläche 16 unten breiter ist als oben.

Die obere und untere Fläche 20, 22 eines Tischteils 18 werden seitlich durch Seitenkanten 24 begrenzt, und nach hinten und vorne durch eine Hinterkante bzw. eine Vorderkante 25. In der Draufsicht bzw. bei einer Projektion auf eine horizontale Ebene fallen diese Seitenkanten 24 mit den Schenkeln S des Umrißtrapezes des Tischteils 18 zusammen, während die Vorderkante 25 mit der längeren Grundlinie und die Hinterkante mit der kürzeren Grundlinie K des Umrißtrapezes zusammenfällt. Gleiches gilt für das Fußteil 10. Die obere Fläche 12 des Fußteils 10 ist durch Seitenkanten 26 und durch eine Hinter- und eine Vorderkante begrenzt, die in der Projektion mit den Schenkeln S und den Grundlinien des Umrißtrapezes des Fußteils zusammenfallen. Bei den in Fig. 3, 5a, 5c, 5d gezeigten Anordnungen von Tischelementen 2 sind die Tischteile 18 und die Fußteile 10 jeweils paarweise mit ihren Seitenkanten 24 bzw. 26 unmittelbar benachbart angeordnet.

In die in den Figuren gezeigten Tischteile 18 sind jeweils ein berührungsaktiver Bildschirm 28 und eine Lese-/Schreibeinrichtung 30 zum Lesen und Beschreiben einer Chipkarte eingebaut. Die Lese-/Schreibeinrichtung 30 weist einen Schlitz 32 zum Einführen der Chipkarte auf. Der Bildschirm 28 und die Lese-/Schreibeinrichtung 30 schließen bündig mit der oberen Fläche 20 des Tischteils 18 ab. In die Säulenteile 14 ist oberhalb des Tischteils 18 ein Datenträgerspender 34 mit einem Schlitz 36 zur Entnahme von Chipkarten eingebaut. Die Säulenteile 16 sind bevorzugterweise mit einem passend geformten Abschlußteil 38₁ bzw. 38₂ an ihrem oberen Ende versehen, so daß der Eindruck einer massiven Säule entsteht (vgl. Fig. 3 und Fig. 4). Auch für die Anordnungen nach Fig. 5c und 5d sind entsprechende Abschlußteile 38₃ und 38₄ vorgesehen (nicht gezeigt).

Die Fig. 6 und 7 zeigen in einer perspektivischen Ansicht von hinten (aus Richtung des Säulenteils), wie das Fußteil 10 und das Tischteil 18 aufgebaut sein können. Bei der gezeigten Ausführungsform sind das Tischteil 18 und das Fußteil 20 hohl ausgebildet. Innerhalb des Tischteils 18 ist das Gehäuse 29 des berührungsaktiven Bildschirms 28 zu erkennen. Die obere und untere Fläche 20, 22 des Tischteils 18 sind durch die Außenseiten einer oberen Wand 40 bzw. einer unteren Wand 42 des Tischteils 18 gebildet. Die obere und die untere Wand 40, 42 gehen in vertikale Randfalze 44, 46, 48, 50, 52 und 54 über. Die Randfalze 48, 50, 52 und 54 liegen in Vertikalebenen durch die Seitenkanten 24. Die Randfalze 44 und 46 liegen in einer durch die kürzere Grundlinie K des Umrißtrapezes des Tischteils 18 festgelegten Vertikalebene.

In prinzipiell gleicher Weise ist auch das Fußteil 10 aufgebaut. Es weist eine obere Wand 56, eine in den Fig. nicht zu erkennende horizontale untere Wand, die Bodenwand, auf mit Randfalzen 58, 60, 62, 64, 66 und 68. Die Unterseite des Fußteils 10 kann aber auch anders ausgebildet sein. Zum Beispiel kann zwischen dem Untergrund und dem Fußteil ein zumindest teilweise vom Untergrund und vom Fußteil umschlossener Zwischenraum gebildet sein, um ein Kippen auf einem unebenen Boden zu vermeiden.

Das Tischteil 18 und das Fußteil 10 können jeweils aus entsprechend zugeschnittenem und entsprechend gebogenem Blech gefertigt sein. Das Tischteil 18 und das Fußteil 10 können aber auch aus Kunststoff, insbesondere aus glasfaserverstärktem Kunststoff, zum Beispiel durch Spritzguß, gefertigt sein.

Das Tischteil 18 und das Fußteil 10 der Figuren 6 und 7 sind dafür vorgesehen, am Säulenteil 14 der Figur 8 angebracht zu werden. Bei der gezeigten Ausführungsform weisen die Randfalze 44, 46, 58 und 60 Bohrungen 70 und 72 auf, und das Säulenteil 14 weist hierzu komplementäre Bohrungen 74 und 76 auf. Mittels der Bohrungen 70 und 74 lassen sich das Tischteil 18 und das Säulenteil 14 miteinander verschrauben, während die Bohrungen 72 und 76 zum Verschrauben des Fußteils 10 und des Säulenteils 14 dienen. Es sind aber auch andere Befestigungsarten zur Befestigung des Tischteils 18 und des Fußteils 10 an dem Säulenteil 14 denkbar, insbesondere eine Befestigung mittels Schlüsselloch-Kopfbolzen-Verbindungen und/oder mittels Schnellspannelementen. Diese Befestigungsarten werden im folgenden im Zusammenhang mit der Verbindung von zwei Säulenteilen 14 miteinander näher erläutert.

Der bevorzugte Aufbau der Säulenteile läßt sich gut in Figur 10 erkennen. Das einzelne Säulenteil 14 ist bevorzugterweise als Profilelement ausgebildet mit einem die Seitenfläche 16 festlegendem Mittelteil 78 und jeweils einem Randfalz 80 bzw. 82 an den beiden vertikalen Rändern des Mittelteils, wobei zwischen den Randfalzen und dem Mittelteil jeweils ein Winkel von 45° eingeschlossen ist. Die beiden Randfalze 80, 82 eines Säulenteils sind unterschiedlich ausgebildet. Die Figuren 11a und 11b zeigen in Frontalansicht einen Randfalz 80 bzw. einen Randfalz 82. Beide Randfalze 80, 82 weisen Löcher 84 bzw. 86 auf. Der Randfalz 80 ist mit doppelt- schlüssellochartigen Langlöchern 86 versehen, während der Randfalz 82 Kopfbolzen 88 aufweist. Die doppelt-schlüssellochartigen Langlöcher weisen zwei zueinander entgegengesetzte Endbereiche größerer Weite und einen im Vergleich zu den Endbereichen schmäleren Mittelbereich auf.

Die Löcher 84 und 86 sowie die Langlöcher 86 und die Kopfbolzen 88 sind jeweils zueinander komplementär. Bei einem Aufbau von mehreren Tischelementen 2 sind die Säulenteile jeweils paarweise nebeneinander angeordnet, wobei jeweils ein Randfalz 80 einem Randfalz 82 unmittelbart benachbart ist. Die Löcher 84 und 86 kommen dabei in Überdeckung, während die Kopfbolzen 88 in der Position genau mit dem schmäleren mittleren Bereich der Langlöcher 86 zusammenfallen. Die Köpfe der Kopfbolzen 88 haben einen größeren Durchmesser als die Breite der Langlöcher 86 in diesem mittleren Bereich.

Um zwei Säulenteile 14 miteinander zu verbinden, sind diese in Längsrichtung gegeneinander zu verschieben, so daß die Köpfe der Kopfbolzen 88 durch einen Endbereich des jeweiligen Langlochs 86 mit größerer Weite hindurchtreten können. Anschließend wird die Verschiebung der Säulenteile 14 wieder rückgängig gemacht, woraufhin die Köpfe der Kopfbolzen 88 den mittleren Bereich des jeweiligen Langlochs 86 hintergreifen, wodurch die beiden Säulenteile 14 sicher miteinander verbunden sind. Zur Sicherung gegen Relativverschiebung der beiden Säulenteile 14 gegeneinander wird dann durch jedes Lochpaar sich deckender Löcher 84, 86 ein Schnellspannelement 90 eingeführt und durch Betätigen des jeweiligen Spannhebels 92 in den Löchern 84, 86 fixiert. Die Verbindung der Randfalze 80 und 82 auf diese Art und Weise ist in der Figur 11c gut zu erkennen. In der Figur 10 sind die miteinander verbundenen Randfalze 80, 82 teilweise geschnitten, und man erkennt, wie das Schnellspannelement 90 durch die Löcher 84 und 86 hindurchgreift.

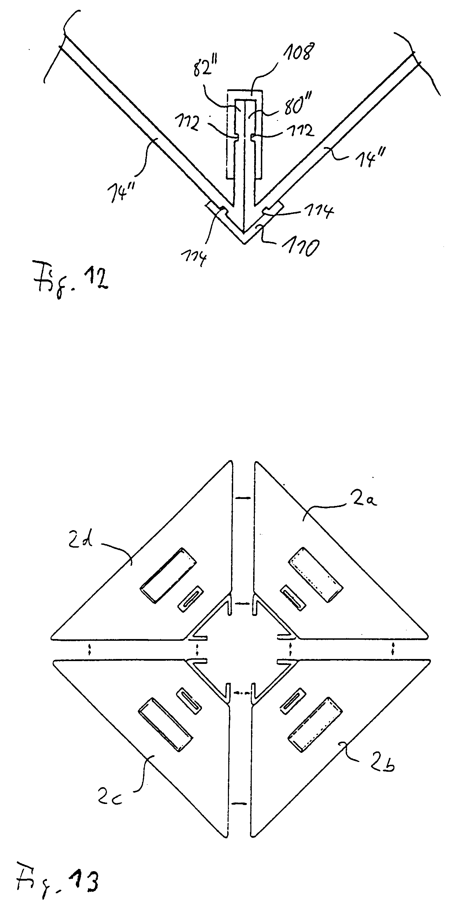

Die Funktions- und Wirkungsweise eines Schnellspannelements 90 ist in den Figuren 9a und 9b näher veranschaulicht. Ein Schnellspannelement 90 weist einen Spannhebel 92, einen im eingesetzten Zustand stationären Körper 94 sowie einen mittels des Spannhebels 92 gegenüber dem Körper 94 exzentrisch verdrehbaren Kopf 96 auf. Der Körper 94, dessen Abmessung auf die Abmessungen der zugeordneten, zur Verbindung dienenden Löcher abgestimmt ist, kann eine Nase oder eine Riffelung aufweisen, durch die ein Verdrehen des Körpers 94 in den zugeordneten Löchern verhindert wird. Im unverdrehten Zustand steht der Kopf 96 nicht quer zur Drehachse des Schnellspannelements 90 über den Körper 94 vor, so daß das Schnellspannelement 90 in die zugeordneten Löcher eingesetzt werden kann. Anschließend wird der Kopf 96 mittels des Spannhebels 92 verdreht, woraufhin er zum Teil über den Körper 94 quer zur Achse des Schnellspannelements 90 vorsteht und die miteinander zu verbindenden Teile hintergreift. Bevorzugterweise weist der Kopf 96 eine Auflaufschräge auf und die Abmessung des Körpers 94 in Richtung der Achse der sich deckenden Löcher 84 und 86 ist etwas geringer als die gemeinsame Dicke der miteinander zu verbindenden Teile, hier der Randfalze 80 und 82. Die zu verbindenden Teile werden dann beim Verdrehen des Kopfes 96 aneinandergepreßt. Bei dem beschriebenen Schnellspannelement 90 handelt es sich um ein in der Möbelindustrie häufig verwendetes Bauteil, das i.A. aus Kunststoff besteht.

Das Säulenteil 14 der bevorzugten Ausführungsform des erfindungsgemäßen Tischelements 2 kann aus entsprechend zugeschnittenem und entsprechend gebogenem Blech gefertigt sein. Es kann sich bei den Säulenteilen aber auch um Aluminium-Strangpressprofile oder um Kunststoffprofile, insbesondere aus glasfaserverstärktem Kunststoff handeln. Um die Naht zwischen zwei miteinander verbundenen Säulenteilen 14 abzudecken, können Abdeckleisten 98, vorzugsweise aus Kunststoff, vorgesehen sein.

Die vorstehend beschriebene Verbindung mittels Schlüsselloch-Kopfbolzen-Verbindungen bzw. mittels Schnellspannelementen kommt bevorzugterweise auch bei den Tischteilen 18 und bei den Fußteilen 10 zum Einsatz. Hierzu weisen die Randfalze 48, 50, 62 und 64 doppelt-schlüssellochartige Langlöcher 100 bzw. 102 auf. Die Randfalze 52, 54, 66 und 68 weisen dementsprechend Kopfbolzen 104 bzw. 106 auf. In den Figuren 6 und 7 ist in den Randfalzen jeweils nur ein Langloch bzw. nur ein Kopfbolzen eingezeichnet; es ist aber bevorzugt, daß jeweils mehrere Langlöcher bzw. Kopfbolzen vorgesehen sind. Löcher zur Aufnahme von Schnellspannelementen können ebenfalls vorgesehen sein, diese sind aber nicht unbedingt notwendig, da die Tischteile 18 bzw. die Fußteile 10 einer Anordnung von mehreren Tischelementen 2 durch die Säulenteile 14 in bezug aufeinander festgelegt sind. Die Langlöcher 86, 100 und 102 der Säulenteile 14, der Tischteile 18 bzw. der Fußteile 10 müssen die gleichen Abmessungen haben, so daß zum Einführen des Kopfes des jeweils gegenüberliegenden Kopfbolzens 88, 104 bzw. 106 die gleiche Relativverschiebung nötig ist.

Die Kopfbolzen der Schlüsselloch-Kopfbolzen-Verbindungen sind bei Säulenteilen, Fußteilen und Tischteilen aus Blech bevorzugterweise eingenietet und bestehen bevorzugterweise aus Metall. Der entsprechende Nietenkopf 89 ist in Fig. 11c zu erkennen. Bei aus Kunststoff gefertigten Tischelementen, insbesondere bei Tischelementen aus glasfaserverstärktem Kunststoff können die jeweiligen Kopfbolzen einstückig mit dem Säulenteil, dem Tischteil bzw. mit dem Fußteil ausgebildet sein.

Die Langlöcher sind als doppelt-schlüssellochartige Langlöcher mit zwei Bereichen größerer Weite ausgebildet, damit auch eine Viereranordnung von vier erfindungsgemäßen Tischelementen 2 auf diese Art und Weise verbunden werden kann. Zur Verbindung der identischen Tischelemente 2a, 2b, 2c und 2d der Figur 13 müßte zum Beispiel bei einem schlüssellochartigen Langloch mit nur einem Bereich größerer Weite das Tischelement 2a, gegenüber dem Tischelement 2d angehoben werden. Das Tischelement 2b müßte wiederum gegenüber dem Tischelement 2a angehoben werden. Das Tischelement 2c müßte wiederum gegenüber dem Tischelement 2b angehoben werden. Das Tischelement 2d kann deshalb nicht gleichzeitig gegenüber dem Tischelement 2c angehoben sein.

Weisen die Tischelemente doppelt-schlüssellochartige Langlöcher auf, so kann man die Verbindung zwischen den vier Tischelementen der Figur 13 dadurch herstellen, daß man nur zum Beispiel die Tischelemente 2a und 2c gegenüber den Tischelementen 2b und 2d anhebt. Die Köpfe der Kopfbolzen der Tischelemente 2a und 2c treten dann in die oberen Bereiche größerer Weite der Langlöcher der Tischelemente 2d und 2b ein, während die Köpfe der Kopfbolzen der Tischelemente 2b und 2d durch die unteren Bereiche größerer Weite der Langlöcher der Tischelemente 2a und 2c eintreten.

Figur 13 macht auch die bevorzugte Art des Zusammenbaus eines Aufbaus von mehreren Tischelementen deutlich. Zuerst werden die Tischteile und die Fußteile an den Säulenteilen angebracht. Anschließend werden die einzelnen Tischelemente miteinander verbunden.

Eine andere Art der Verbindung der Tischelemente miteinander, die ggf. zusätzlich verwendet werden kann, ist in Figur 12 am Beispiel zweier Säulenteile 14'' gezeigt. Über die Randfalze 80''und 82'' ist ein Aufschiebeprofil 108 übergeschoben. Auch an der von zwei Säulenteilen gebildeten Ecke kann, wie in Figur 12 gezeigt, ein Aufschiebeprofil 110 übergeschoben sein. Bevorzugterweise weisen die Randfalze 80'' und 82'' Nuten 112 auf, in die entsprechende innen verlaufende Wülste an dem Aufschiebeprofil 108 eingreifen. In gleicher Weise greifen Wülste am Aufschiebeprofil 110 in zugeordnete Nuten 114 in den vertikalen Seitenflächen der Säulenteile 14'' ein. Derartige Verbindungen mittels Aufschiebeprofilen können auch zwischen den Tischteilen und den Fußteilen vorgesehen sein.

Die erfindungsgemäße Einrichtung ermöglicht somit die Durchführung von Gewinnspielen verschiedener Art, welche z.B. Spiele umfassen, bei denen der Gewinn unmittelbar nach Durchführung des Spiels feststeht oder bei welchen der Gewinn erst nach einer z.B. täglich oder wöchentlich erfolgenden Ziehung festgestellt wird. Der Spieler kann die zur Teilnahme an einer Ziehung erforderlichen "Spielscheine" in einfacher Weise durch antippen einzelner Eingabefelder am Bildschirm der Spieleinheit ausfüllen und diese dann auf einem Datenträger speichern. Mit den auf dem Datenträger gespeicherten "Spielscheinen" kann der Spieler beliebig oft an einer Ziehung teilnehmen, so daß das für den Spieler zeitaufwendige Ausfüllen von Spielscheinen entfällt.

Ferner kann der Spieler an der Spieleinheit in einfacher Weise zwischen verschiedenen Spielen wechseln, indem er wiederum durch das Antippen entsprechender Eingabefelder ein Spiel auswählt, wobei der auf dem Datenträger gespeicherte Spielkontostand vom Spieler zur Durchführung verschiedener Spiele verwendet werden kann.

Beim Durchführen von Gewinnspielen, bei welchen eine Gewinnzeichenkombination in einer wöchentlichen oder täglichen Ziehung ermittelt wird, ist durch das doppelte Abspeichern des vom Spieler abgegebenen Tips für die Gewinnzeichenkombination sowohl auf dem Datenträger als auch in einer zentralen Speichereinheit die Gefahr eines Betrugs durch nachträgliche Manipulation der auf dem Datenträger gespeicherten Daten ausgeschlossen. Durch die Übertragung der Daten zur zweiten zentralen Speichereinrichtung, in welcher diese dann zum Ermitteln möglicher Gewinner und als Sicherung für eine vorbestimmte Zeit gespeichert werden, verringert sich auch der Aufwand für den Betreiber der erfindungsgemäßen Einrichtung erheblich, da das bisher erforderliche Transportieren der Scheine zu einer Zentrale, das Ablichten der Scheine und das Einlesen der Scheine ein ein Speichermedium nicht mehr erforderlich ist.

Zusammenfassend betrifft die vorliegende Erfindung ferner ein Tischelement mit einer elektronischen Spieleinheit, welche zu einer Einrichtung zum Durchführen von Spielen, insbesondere von Gewinnspielen, insbesondere Lotteriespielen gehört. Das Tischelement läßt sich einzeln oder in Anordnungen unterschiedlicher Konfiguration von mehreren Tischelementen aufstellen, wodurch eine einfache Anpassung an unterschiedliche Raumverhältnisse möglich ist. Die Grundform des Tischelements entspricht im wesentlichen einem Sektor eines Kreises oder eines regelmäßigen Vielecks.

## Patentansprüche

1. Einrichtung zum Durchführen von Spielen, insbesondere von Gewinnspielen, insbesondere Lotteriespiele, mit wenigstens einer Spieleinheit (10',12'), wobei die wenigstens eine Spieleinheit (10',12') umfaßt:
- eine erste Lese/Schreib-Einrichtung (18',20') zum Lesen von Daten von einem Datenträger (22') und zum Schreiben von Daten auf den Datenträger(22'),
- eine Bildwiedergabeeinrichtung (14') zur Wiedergabe von das Spiel betreffender Information sowie von von dem Datenträger (22') gelesenen Daten,
- ein Datenspeichermedium zum Speichern von das Spiel betreffenden Daten,
- eine Befehlseingabeeinrichtung (50') zur Eingabe von Eingabebefehlen, insbesondere von Spielbefehlen, und
- eine zentrale Recheneinheit zum Steuern der Spieleinheit (10',12').

2. Einrichtung nach Anspruch 1,
dadurch gekennzeichnet,
daß der Datenträger (22') eine Chipkarte (22') ist.

3. Einrichtung nach Anspruch 1,
dadurch gekennzeichnet,
daß der Datenträger ein Magnetspeichermedium ist, insbesondere eine Magnetstreifenkarte.

4. Einrichtung nach einem der Ansprüche 1 - 3,
dadurch gekennzeichnet,
daß die Bildwiedergabeeinrichtung (14') einen Bildschirm (14') umfaßt.

5. Einrichtung nach Anspruch 4,
dadurch gekennzeichnet,
daß die Befehlseingabeeinrichtung (50') eine berührungsaktive Oberfläche (50') des Bildschirms (14') umfaßt zur Auswahl von auf dem Bildschirm (14') angezeigten Eingabefeldern (48') als Eingabebefehle.

6. Einrichtung nach einem der Ansprüche 1 - 5,
dadurch gekennzeichnet,
daß die wenigstens eine Spieleinheit (10',12') wenigstens zeitweise mit einer ersten zentralen Speichereinheit (24') zum Datenaustausch verbunden ist.

7. Einrichtung nach einem der Ansprüche 1 - 6,
dadurch gekennzeichnet,
daß eine Mehrzahl von Spieleinheiten (10',12') vorgesehen ist, und daß die Spieleinheiten (10',12') wenigstens zeitweise zum Datenaustausch miteinander verbunden sind.

8. Einrichtung nach einem der Ansprüche 6 oder 7,
dadurch gekennzeichnet,
daß wenigstens eine Spieleinheit (10',12') und/oder die erste zentrale Speichereinheit (24') eine Datenübertragungseinrichtung (26') umfaßt zum Übertragen von Daten in das und von dem Datenspeichermedium der wenigstens einen Spieleinheit (10',12').

9. Einrichtung nach Anspruch 8,
dadurch kekennzeichnet,
daß die Datenübertragungseinrichtung (26') eine zweite Lese/Schreib-Einrichtung (26') umfaßt.

10. Einrichtung nach einem der Ansprüche 6 - 9,
dadurch gekennzeichnet,
daß die wenigstens eine Spieleinheit (10',12') mit der ersten zentralen Speichereinheit (24') nur zum Übertragen von auf dem Datenspeichermedium zu speichernden Daten oder von auf dem Datenspeichermedium gespeicherten Daten verbunden ist.

11. Einrichtung nach einem der vorhergehenden Ansprüche,
dadurch gekennzeichnet,
daß die auf dem Datenträger (22') gespeicherten Daten einen den Datenträger (22') identifizierenden Identifikationscode umfassen, sowie ferner:
- eine einen speziellen Spieler identifizierende Bezeichnung, insbesondere den Namen des Spielers, und/oder
- einen Spielkontostand und/oder
- wenigstens ein spezielles Spiel betreffende Information, insbesondere einen Lotterietip.

12. Einrichtung nach einem der Ansprüche 1 - 11,
dadurch gekennzeichnet,
daß die Einrichtung ferner wenigstens eine Kasseneinheit (28',30') umfaßt, wobei die wenigstens eine Kasseneinheit (28',30') eine weitere Lese/Schreib-Einheit (42',44') umfaßt zum Lesen der auf dem Datenträger (22') gespeicherten Daten und zum Schreiben von Daten auf den Datenträger (22').

13. Einrichtung nach Anspruch 12,
dadurch gekennzeichnet,
daß die wenigstens eine Kasseneinheit (28',30') mit einer zweiten zentralen Speichereinrichtung (36') zum Datenaustausch verbunden ist.

14. Einrichtung nach einem der Ansprüche 12 oder 13,
dadurch gekennzeichnet,
daß die wenigstens eine Kasseneinheit (28',30') ferner eine Anzeigeeinrichtung (38',40') umfaßt, zum Anzeigen von von dem Datenträger (22') gelesenen Daten und/oder von von der zweiten zentralen Speichereinrichtung (36') übertragenen Daten.

15. Einrichtung nach einem der Ansprüche 13 oder 14,
dadurch gekennzeichnet,
daß die Kasseneinheit (28',30') wenigstens den Identifikationscode und die das wenigstens eine Spiel betreffende Information zur zweiten zentralen Speichereinrichtung (36') überträgt.

16. Einrichtung nach einem der Ansprüche 12 - 15,
dadurch gekennzeichnet,
daß die Kasseneinheit (28',30') ferner eine Leseeinrichtung (56') zum Lesen herkömmlicher Lotteriescheine umfaßt.

17. Einrichtung nach einem der vorhergehenden Ansprüche,
dadurch gekennzeichnet,
daß an der wenigstens einen Spieleinheit (10',12') ferner eine akustische Wiedergabeeinrichtung (52',54') zur akustischen Wiedergabe von das Spiel betreffender Information vorgesehen ist.

18. Einrichtung nach einem der Ansprüche 12 - 17,
dadurch gekennzeichnet,
daß die Kasseneinheit (28',30') eine einem Spielkontostand entsprechende Information auf den Datenträger (22') schreibt, und daß die Spieleinheit (10',12') den Kontostand liest und je nach momentanem Kontostand das Durchführen von Spielen ermöglicht, wobei die Spieleinheit (10',12') bei jedem durchgeführten Spiel einen einem Preis des Spiels entsprechenden Betrag vom Spielkontostand subtrahiert.

19. Einrichtung nach Anspruch 18,
dadurch gekennzeichnet,
daß die Spieleinheit (10',12') einen bei einem Sofort-Gewinnspiel erzielten Gewinn zum momentanen Spielkontostand addiert.

20. Einrichtung nach Anspruch 18 oder 19,
dadurch gekennzeichnet,
daß die Kasseneinheit (28',30') den momentanen Spielkontostand liest und einen dem momentanen Spielkontostand entsprechenden Betrag auszahlt.

21. Einrichtung nach einem der Ansprüche 11 - 20,
dadurch gekennzeichnet,
daß die Spieleinheit (10',12') wenigstens eine von einem Spieler eingegebene Zeichenkombination, insbesondere einen Lotterietip, auf den Datenträger (22') schreibt, und daß die Kasseneinheit (28',30') die wenigstens eine Zeichenkombination vom Datenträger (22') liest und einen dem Preis des Spiels entsprechenden Betrag ermittelt, und daß die Kasseneinheit (28',30') nach dem Bezahlen des dem Preis des Spiels entsprechenden Betrags oder nach Subtraktion des Preises vom momentanen Spielkontostand den Identifikationscode und wenigstens die wenigstens eine Zeichenkombination zur zweiten zentralen Speichereinrichtung (36') zum Speichern der Daten übermittelt.

22. Einrichtung nach Anspruch 21,
dadurch gekennzeichnet,
daß in der zweiten zentralen Speichereinrichtung (36') Information über eine Gewinnzeichenkombination gespeichert ist, und daß die Kasseneinheit (28',30') den Identifikationscode des Datenträgers (22') sowie die auf dem Datenträger (22') gespeicherte, wenigstens eine Zeichenkombination liest und mit dem von der zweiten Speichereinheit (36') abgerufenen Identifikationscode und der entsprechenden Zeichenkombination vergleicht und bei Übereinstimmung die wenigstens eine Zeichenkombination mit der vor der zweiten zentralen Speichereinheit (36') abgerufenen Gewinnzeichenkombination vergleicht, und dann, wenn die wenigstens eine Zeichenkombination einem Gewinn entspricht, den Gewinn auszahlt oder zum momentanen Spielkontostand addiert.

23. Einrichtung nach einem der Ansprüche 20 - 22,
dadurch gekennzeichnet,
daß die Kasseneinheit (28',30') einen Gewinn nur bis zu einem vorbestimmten Betrag auszahlt.

24. Einrichtung nach einem der Ansprüche 12 - 23,
dadurch gekennzeichnet,
daß die Kasseneinheit (28',30') ferner zum Erstellen eines Spielbelegs zum Quittieren eines durchgeführten Spiels ausgebildet ist.

25. Einrichtung nach Anspruch 24,
dadurch gekennzeichnet,
daß die Kasseneinheit (28',30') eine einem Spielbeleg entsprechende Information auf dem Datenträger (22') speichert.

26. Einrichtung nach Anspruch 24 oder 25,
dadurch gekennzeichnet,
daß die Kasseneinheit (28',30') ferner eine Einrichtung zum Erstellen eines schriftlichen Belegs umfaßt.

27. Tischelement, insbesondere für ein modulares Tischelement system, welches Tischelement (2) eine zu einer Einrichtung zum Durchführen von Spielen, insbesondere von Gewinnspielen, insbesondere Lotteriespielen, insbesondere nach einem der Ansprüche 1-26, gehörende elektronische Spieleinheit umfaßt mit einer Lese-/Schreibeinrichtung (30) zum Lesen und Beschreiben eines Datenträgers, insbesondere einer Chipkarte, einer Bildwiedergabeeinrichtung (28) zur Wiedergabe von das Spiel betreffender Information sowie gegebenfalls von dem Datenträger gelesenen Daten und einer Befehlseingabeeinrichtung (28) zur Eingabe von Eingabebefehlen, insbesondere von Spielbefehlen, gegebenfalls in Form eines berührungsaktiven Bildschirms (28), welches Tischelement (2) ein Fußteil (10), ein Säulenteil (14) und ein die Spieleinheit (28, 30) aufnehmendes Tischteil (18) umfaßt, wobei die von dem Säulenteil (14) abgelegene Vorderkante (25) des Tischteils (18) einem um eine Säulenachse zentrierten Kreisbogen folgt oder einer Seite eines um die Säulenachse zentrierten regelmäßigen Vielecks entspricht und wobei die von der Vorderkante (25) zum Säulenteil (14) führenden beiden Seitenkanten (24) des Tischteils (18) jeweils in einer die Säulenachse enthaltenen Seitenebene liegen und die beiden Seitenebenen einen Sektorwinkel einschließen, der einem n-ten Teil von 360° entspricht.

28. Tischelement nach Anspruch 27, dadurch gekennzeichnet, daß der Sektorwinkel 90° beträgt.

29. Tischelement nach Anspruch 28, dadurch gekennzeichnet, daß der Umriß des Tischteils (18) und der Umriß des Fußteils (10) in Projektion auf eine Ebene senkrecht zum Säulenteil (14) im wesentlichen trapezförmig ist entsprechend einem jeweiligen gleichschenkligen Umrißtrapez.

30. Tischelement nach Anspruch 29, dadurch gekennzeichnet, daß das Säulenteil (14) eine vertikale Seitenfläche (16) aufweist, deren Breite (B) in Höhe des Tischteils (18) im wesentlichen der Länge der kürzeren Grundlinie (K) des Umrißtrapezes des Tischteils (18) entspricht und dessen Breite (B) in der Höhe des Fußteils (10) im wesentlichen der Länge der kürzeren Grundlinie (K) des Umrißtrapezes des Fußteils (10) entspricht.

31. Tischelement nach Anspruch 30, dadurch gekennzeichnet, daß das Säulenteil (14) als profilelement ausgebildet ist mit einem die Seitenfläche (16) festlegenden Mittelteil (78) und jeweils einem Randfalz (80, 82) an beiden vertikalen Rändern des Mittelteils (78), die von der Seitenfläche (16) wegweisen und jeweils einen Winkel von 45° mit dem Mittelteil (78) einschliessen.

32. Tischelement nach Anspruch 30 oder 31, dadurch gekennzeichnet, daß das Tischteil (18) und das Fußteil (10) jeweils im Bereich der kürzeren Grundlinie (K) des jeweiligen Umrißtrapezes wenigstens einen vertikalen Randfalz (44, 46, 58, 60) aufweisen, mit dem sie mit dem Säulenteil (14) an der einen Seitenfläche (16) lösbar verbunden sind.

33. Tischelement nach einem der Ansprüche 27 - 32, dadurch gekennzeichnet, daß das Tischteil (18) und das Fußteil (10) in den Bereichen der Schenkel (S) ihres jeweiligen Umrißtrapezes wenigstens einen vertikalen Seitenrandfalz (48, 50, 52, 54, 62, 64, 66, 68) aufweisen.

34. Tischelement nach einem der Ansprüche 27 - 33, dadurch gekennzeichnet, daß das Tischteil (18) eine obere pultartig geneigte Fläche (20) aufweist.

35. Tischelement nach Anspruch 34, dadurch gekennzeichnet, daß das Tischteil (18) eine untere Fläche (22) aufweist mit zur Neigung der oberen Fläche (20) entgegengesetzter Neigung.

36. Tischelement nach einem der Ansprüche 27 - 35, dadurch gekennzeichnet, daß das Fußteil (10) eine pultartig geneigte obere Fläche (12) aufweist.

37. Tischelement nach einem der Ansprüche 27 - 36, dadurch gekennzeichnet, daß das Tischelement (2) einen Datenträgerspender (32) zur Abgabe von Datenträgern, insbesondere von Chipkarten, umfaßt, welcher Datenträgerspender die Datenträger unentgeltlich oder entgeltlich, insbesondere nach Einwurf einer Münze, abgibt.

38. Tischelement nach Anspruch 37, dadurch gekennzeichnet, daß der Datenträgerspender (32) oberhalb des Tischteils (18) in das Säulenteil (14) aufgenommen ist.

39. Tischelement nach einem der Ansprüche 32 bis 38, dadurch gekennzeichnet, daß das Tischteil (18) und/oder das Fußteil (10) an das Säulenteil (14) angeschraubt sind.

40. Tischelement nach einem der Ansprüche 32 bis 38, dadurch gekennzeichnet, daß das Tischteil (18) und/oder das Fußteil (10) mittels Schlüsselloch-Kopfbolzen-Verbindungen und/oder mittels durch Löcher im Randfalz (44, 46, 58, 60) und im Säulenteil (14) hindurchgreifende Schnellspannelemente (90) miteinander verbunden sind.

41. Aufbau aus zwei, drei oder vier Tischelementen (2) nach einem der Ansprüche 27 - 40, dadurch gekennzeichnet, daß die Tischteile (18) jeweils paarweise mit ihren Seitenkanten (24) unmittelbar benachbart angeordnet sind.

42. Aufbau nach Anspruch 41 aus Tischelementen (2) nach den Ansprüchen 31 und 33, dadurch gekennzeichnet, daß die Tischteile (18) und die Fußteile (10) jeweils paarweise an ihren Seitenrandfalzen (48, 50, 52, 54, 62, 64, 66, 68) lösbar miteinander verbunden sind und daß die Säulenteile (14) paarweise mit ihren Randfalzen (80, 82) lösbar miteinander verbunden sind.

43. Aufbau nach Anspruch 42, dadurch gekennzeichnet, daß die Tisch-, Fuß- und/oder Seitenteile mittels Schlüsselloch-Kopfbolzen-Verbindungen (100, 104; 102, 106; 86; 88) und/oder mittels durch Löcher in den Falzen hindurchgreifende Schnellspannelemente (90) miteinander verbunden sind.

44. Aufbau nach einem der Ansprüche 41 bis 43, dadurch gekennzeichnet, daß die Tisch-, Fuß- und/oder Säulenteil (14)e mittels Aufschiebeprofilen (108, 110) miteinander verbunden sind.

45. Aufbau nach Anspruch 44, dadurch gekennzeichnet, daß die Aufschiebeprofile (108, 110) in Nuten (112, 114) eingreifen, die die Aufschiebeprofile (108, 110) in bezug auf die zu verbindenden Teile festlegen.
